# EUROPEAN PATENT SPECIFICATION

(11) **EP 1 424 820 B1**
(45) Date of publication and mention of the grant of the patent: **11.10.2006**
(21) Application number: 03019703.2
(22) Date of filing: 28.08.2003
(51) Int. Cl.: H04L 12/58, H04L 12/18, H04L 12/28, H04L 29/06

(54) **Distributed communication system**
Verteiltes Kommunikationssystem
Système de communication distribué

(30) Priority: 27.11.2002 JP 2002343181
(43) Date of publication of application: 02.06.2004
(73) Proprietor: Hitachi, Ltd., Chiyoda-ku, Tokyo 100-8010 (JP)
(72) Inventor: Tanigawa, Keiko, Hitachi, Ltd., Intel. Prop. Group, Chiyoda-ku, Tokyo 100-8220 (JP); Fukuzawa, Junji, Hitachi, Ltd., Intel. Prop. Group, Chiyoda-ku, Tokyo 100-8220 (JP); Shiga, Kenta, Hitachi, Ltd., Intellec. Prop. Group, Chiyoda-ku, Tokyo 100-8220 (JP)
(74) Representative: Strehl Schübel-Hopf & Partner

(56) References cited:
- US-A1- 2001 025 314
- US-A1- 2002 037 736
- 3GPP: "3rd Generation Partnership Project;Technical Specification Group Services and System Aspects; Presence Service; Architecture and Functional Description (Release 6)" 3GPP TS 23.141 V0.0.0, XX, XX, June 2002 (2002-06), page complete XP002243553

## Description

### BACKGROUND OF THE INVENTION

The present invention relates to a communication control system applied to a communication network supporting multicasts and a communication control method adopted for the system.

Present popularization of a broadband network allows homes to also carry out data communications at a high speed. Also as terminals, there have been widely used not only the conventional desktop PCs, but also portable notebook PCs, PDAs and hand phones. Thus, the networks themselves now include radio networks with a rapidly growing domain of applications including commences of services rendered so as to allow radio networks to be used at public places such as train stations and coffee shops.

With such developments serving as a background, attention is paid to an ad hoc network functioning as a mechanism for implementing communications by formation of a temporary multi-user network including a plurality of terminals that can be utilized by a radio network. Traditionally, even though an attempt is made at a communication site to use a radio network, a communication cannot be carried out because the communication site is outside a range reachable by an electric wave generated by a base station or, even if the communication site is inside the range reachable by the electric wave, the condition prevailing at that time makes it difficult for the electric wave to reach the communication site in some cases. An ad hoc network is a network capable of establishing a communication even in a range unreachable by an electric wave generated by a base station by allowing terminals close to each other to play the roles of the base station and/or routers in case the communication site is outside the range reachable by an electric wave generated by the base station or the communication site is inside the range but the condition prevailing at that time makes it difficult for the electric wave to reach the communication site. That is to say, an ad hoc network in radio communication is a temporary network, which comprises only terminals each having functions of a repeater and does not rely on a specific infra structure such as a base station.

With regard to a communication method in an ad hoc network described above, there has been developed a technology aimed at providing a group communication method for which a closed-area communication network can be constructed autonomously among an unspecified number of communication terminals as is described in documents such as patent reference 1.

On the other hand, there is a communication method known as a chat allowing messages to be exchanged in an almost real-time manner unlike emails, which have been becoming popular at the present time. In accordance with a management method of a chat system, there is generally provided a group referred to as a conference room, to which users participating in a communication as group members make accesses in order to exchange messages. A management server manages the users participating in a chat.

In addition, an instant messaging service referred to hereafter simply as an IM has been becoming popular. The IM comprises the aforementioned message-exchanging service and a presence service capable of knowing information on presence of a specific user in advance. The information on presence of a specific user typically indicates whether or not the specific user is in a state of being connected to a network and capable of carrying out a communication.

From the multi-user-communication point of view, a server such as an MCU (Media Control Unit) for managing communications is normally required for the communication method described above. The ITU-T (International Telecommunication Unit), which sets specifications of multimedia communications through a LAN, prescribes a multi-point conference of a concentrated or distributed type in the H.323. In the case of the concentrated type, each terminal sets a point-to-point session with the MCU, which controls data of both session control and media. In the case of the distributed type, on the other hand, each terminal transmits and receives audio and video data by using a multicast function. However, control-channel data such as the number of video and audio streams that can be received is collected in a management unit referred to as an MC (Multipoint Control) by the H.245. The MC may be included in the MCU or a terminal. If the MC is employed in a terminal, at least one is required in a group participating in a conference. A terminal supporting the distributed type must be a terminal in charge of mixing a plurality of pieces of received audio data and selection of video data.

From the multicast-communication point of view, there is known multicast audio communication software named VAT on a multicast network called the Internet Multicast Backbone (M-BONE) as is disclosed in non-patent reference 1. The multicast communication has been proposed by, among other protocols, a protocol known as a DVMRP (Distance Vector Multicast Routing Protocol).

In accordance with another technology disclosed in patent reference 2, when a plurality of terminals each having a television conference function carry out amulti-site television conference through a network allowing a resource to be reserved by using an ATM, a band is secured by setting connections in a star-like form among the terminals. In each of the terminals participating in the television conference, video and audio data received from a plurality of sites is processed. To be more specific, in the case of video data, the screen is divided into areas according to the number of video streams. In the case of audio data, a mixing process is carried out.

From the IM point of view, the ordinary IM system implements communications of a server-client type. In such a type of communication, a client first registers its own information in a presence server for managing information on presence. Then, the client receives the present state of a buddy list (a friend list) , which has been cataloged in the presence server in advance. From the buddy list, the terminal is capable of knowing who are already in an online connection with the presence server. By referring to information included in the buddy list, a user to serve as an IM communication partner is selected. A message to be sent to the selected partner is created and transmitted to the partner by way of an IM server, which can be included in physically the same apparatus as the presence server. Receiving the message, the IM server acquires information on the message sender from the presence server and determines the address of the sender to receive a response. In this way, a client sends data to another client by way of the IM server.

A communication system including a control of presence information is disclosed by US-2001/0025314-A.

### Patent reference 1

Japanese Unexamined Patent Application Publication No. 2002-111679, also published as US-2002/0037736-A.

### Patent reference 2

Japanese Unexamined Patent Application Publication No. Hei 11-331155

### Non-patent reference 1

"VAT (Visual Audio Tool)", [online], UC Berkeley, Lawrence Berkeley National Laboratory, searched on November 14, 2002, Internet address (URL): http://www-nrg.ee.lbl.gov/vat/

In accordance with the technology disclosed in patent reference 1, when it is desired to carry out a sort of group communication between a terminal and other terminals, a call for formation of a group is broadcasted. The group is then formed to comprise only terminals responding to the call within a predetermined period of time. If some groups already exist, information on the existing groups is transmitted from an unspecified number of terminals by unicasting. After the terminals participate in the formed group, user data is transmitted and received by multicasting. Nevertheless, it is impossible to know information on presence of other users.

Even by using the software disclosed in non-patent reference 1 cited above, only 1 person is allowed to talk. While a person is talking, other persons are capable of only listening to the talking person, giving rise to a lack of convenience.

When an audio communication is carried out by using conventional terminals, at least 1 apparatus for managing a conference is required in order to implement an audio communication between a number of users. The apparatus for managing a conference can be a server serving as an MCU or a communication terminal having functions of such a server. In addition, also in the conventional IM system, a server is required. In order to carry out an audio communication among a number of users through a network temporarily constructed like an ad hoc network, however, it is necessary to render a service without using a server.

Furthermore, in accordance with a technique whereby a star-like connection is set among communication terminals, the communication terminals are connected to each other to carry out unicasting communications. Thus, a relaying terminal also sees a rise in amount of communicated data due to an increase in connected-terminal count as a load to be borne by the relaying terminal, which does not actually execute an application, and causes the communication quality to deteriorate as is observed in an ad hoc network.

For the reasons described above, a multi-user communication method suitable for an ad hoc network is required.

### SUMMARY OF THE INVENTION

The invention provides a distributed type communication system as defined by claim 1. Preferred embodiments thereof are defined by the subclaims.

The present invention provides a technology for implementing an audio communication among a number of users, a 1-to-1 text message exchange and a text message exchange among a number of users, which would otherwise require a conventional server should the conventional technology be adopted, by using only client terminals each having no server functions in a network environment capable of carrying out multicast communications. It is to be noted that, in the following description, transmission and reception of a text message or an exchange of a text message are referred to as an IM. Thus, a 1-to-1 text message exchange and a text message exchanges among a number of users are referred to hereafter as a 1-to-1 IM and a multi-user IM respectively.

In the distributed communication system provided by the present invention, a terminal in an online state broadcasts an online command to all other terminals while a terminal in an offline state broadcasts an offline command to all other terminals. An online state of a terminal is a state in which the terminal is connected to a network capable of multicasting information. On the other hand, an offline state of a terminal is a state in which the terminal is disconnected from a network capable of multicasting information. A terminal in an online state allocates resources used in a plurality of channels consenting in advance. The resources include a buffer, a UDP-reception-waiting socket for multicasting and a TCP-reception-waiting socket for a 1-to-1 IM. In addition, a terminal acquires information on presence of another user by broadcasting a request for such information, and the user of the terminal selects a communication method on the basis of the information on presence.

In the case of a multi-user communication, for both an IM and an audio communication, a client terminal transmits a participation-expressing command including the number of a channel, which the terminal wants to participate in, as a packet destined for a multicast address assigned to the channel in advance and set in the client terminal beforehand. At the same time, the client terminal also transmits a text message and audio data to the multicast address.

In addition, if other terminals are participating in the channel, the client channel receives a plurality of text messages and a plurality of pieces of audio data from the other terminals. The pieces of audio data received periodically from the other terminals are mixed and mixed audio data is reproduced. In order to disconnect the client terminal from the channel, the client terminal transmits a disconnection command to the multicast address. In the case of a 1-to-1 IM, a TCP between the client terminal and another client terminal serving as a communication partner is set so as to allow a text message to be exchanged with the partner in accordance with the TCP.

The present invention allows multi-user communications suitable for an ad hoc network to be carried out.

### BRIEF DESCRIPTION OF THE DRAWINGS

Fig. 1 is a diagram showing an overall configuration of a distributed communication system implemented by an embodiment;
Fig. 2 is a diagram showing a typical internal configuration of a client terminal;
Fig. 3 is a diagram showing a typical format of a session management table for multi-user communications;
Fig. 4 is a diagram showing a typical format of a channel management table;
Fig. 5 is a diagram showing a typical format of a reception management table;
Fig. 6 is a diagram showing a typical format of a transmission management table;
Fig. 7 is a diagram showing a typical format of a command for setting or cutting a connection to a multicast network;
Fig. 8 is a diagram showing a typical format of a session control command for multi-user communications;
Fig. 9 is a diagram showing a typical format of a packet containing audio data;
Fig. 10 is a diagram showing a typical format of an IM session control command;
Fig. 11 is a diagram showing a typical format of a packet containing IM text data;
Fig. 12 is a diagram showing a typical main screen;
Fig. 13 is a diagram showing a typical setting screen;
Fig. 14 is a diagram showing a typical screen for carrying out a process of setting or cutting a connection to a multicast network;
Fig. 15 is a diagram showing a typical 'Communication: VOIP' screen;
Fig. 16 is a diagram showing a typical 'Communication: IM' screen;
Fig. 17 is a diagram showing a typical 'Communication: IM-Conference' screen;
Fig. 18 is a diagram showing a typical screen for displaying information on presence as a result of selecting an item displayed on the main screen;
Fig. 19 is a diagram showing a typical sequence of session control;
Fig. 20 is a diagram showing a typical sequence of a process carried out on a user-generated event as part of the session control;
Fig. 21 is a diagram showing a typical continuation sequence of the process carried out on a user-generated event as part of the session control;
Fig. 22 is a diagram showing a typical continuation sequence of the process carried out on a user-generated event as part of the session control;
Fig. 23 is a diagram showing a typical sequence of a process carried out on a network-generated event as part of the session control;
Fig. 24 is a diagram showing a typical continuation sequence of the process carried out on a network-generated event as part of the session control;
Fig. 25 is a diagram showing a typical sequence of processing to process IM data;
Fig. 26 is a diagram showing a typical sequence of a process to transmit audio data;
Fig. 27 is a diagram showing a typical sequence of a process to receive IM data;
Fig. 28 is a diagram showing a typical sequence of a process to mix IM data;
Fig. 29 is a diagram showing a typical sequence of processing to process IM data; and
Fig. 30 is a diagram showing a typical continuation sequence of the processing to process IM data.

### EMBODIMENT OF THE INVENTION

A preferred embodiment of the present invention is described by referring to the diagrams.

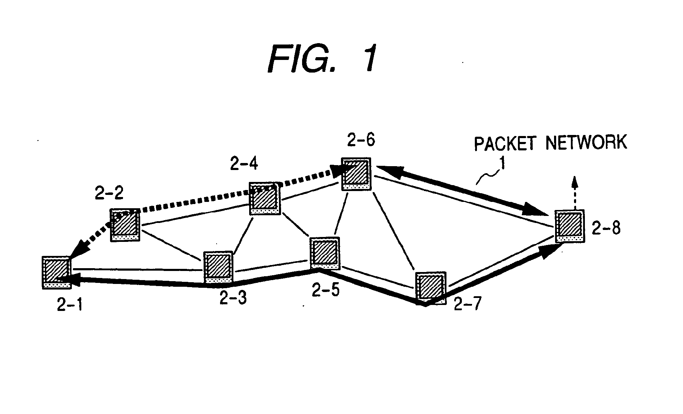

Fig. 1 is a diagram showing a typical configuration of a distributed communication system implemented by an embodiment of the present invention. In the distributed communication system, a plurality of client terminals 2-n is connected to a packet network 1 capable of carrying out multicast communications. In the case of the typical configuration of the embodiment shown in the figure, 8 client terminals 2-n where n = 1 to 8 are connected to packet network 1. Each of the client terminals 2 has a function to use multicasting and a function to transfer packet data. An example of the function to use multicasting is a function to transmit and receive a packet to and from a multicast group, in which the client terminal is participating. The function to transfer packet data is referred to as a routing function.

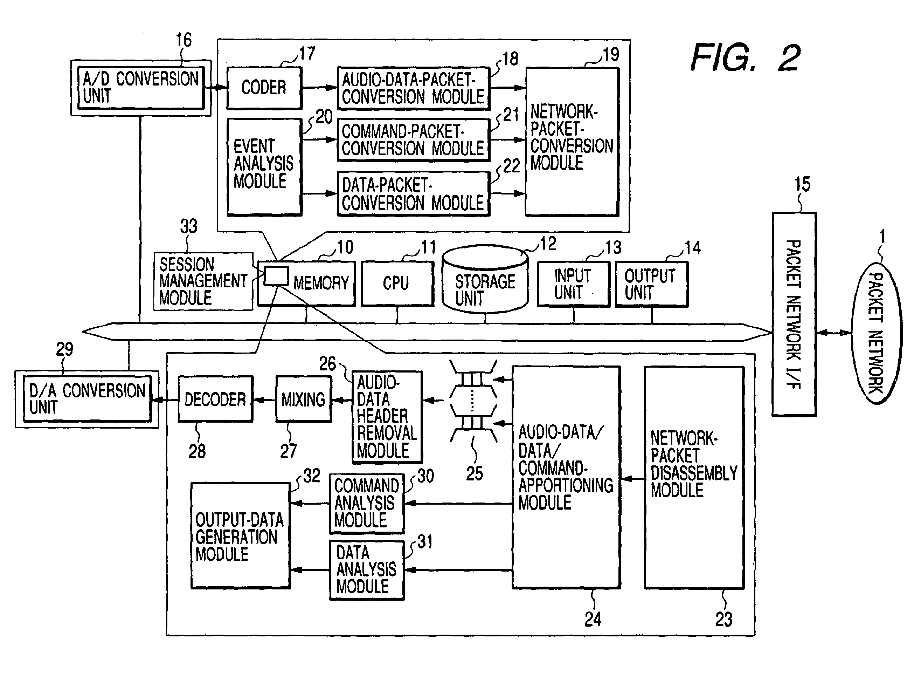

Fig. 2 is a diagram showing the internal configuration of the client terminal 2. As shown in the figure, the client terminal 2 comprises a memory 10, a CPU 11 for executing a communication program 9, a storage unit 12, an input unit 13, an output unit 14, a packet network interface 15, a D/A conversion unit 29 and an A/D conversion unit 16. The memory 10, the CPU 11, the storage unit 12, the input unit 13, the output unit 14, the packet network interface 15, the D/A conversion unit 29 and the A/D conversion unit 16 are connected to each other by an internal communication line such as a bus. The memory 10 is a component for storing the communication program 9 and the CPU 11 is a component for executing the communication program 9. Used for inputting characters, voices/sounds and other types of information, the input unit 13 includes a keyboard, a mouse, a pen and a mike. Used for outputting voices/sounds and displaying characters, the output unit 14 includes a speaker and a display unit. The packet-network interface 15 is a component for carrying out communications with the packet network 1. The D/A conversion unit 29 is a component for converting digital audio data into analog audio data. On the other hand, the A/D conversion unit 16 is a component for converting analog audio data into digital audio data.

The communication program 9 stored in the memory 10 comprises a session management module 33, a network-packet disassembly module 23 and an audio-data/data/command-apportioning module 24. The session management module 33 is a module for executing session control. The network-packet disassembly module 23 is a module for removing network header information from a packet received through the packet-network interface 15 in reception processing. The audio-data/data/command-apportioning module 24 is a module for apportioning audio data, a command and general data, which are each extracted from a packet with the network header information already removed from it, to other modules. The contents of a packet are audio data, a command or general data.

The communication program 9 further includes a plurality of output-data queues 25, an audio-data header removal module 26, a mixing module 27 and a decoder 28. Each of the output-data queues 25 is a module for receiving audio data, which has been extracted from a received packet, from the audio-data/data/command-apportioning module 24. Each of the output-data queues 25 is used for temporarily storing audio data received from a transmitting client terminal. The audio-data header removal module 26 is a module for extracting pieces of audio data from the output-data queues 25 for every unit time, starting with the piece of audio data stored in the slot at the head of the output-data queues 25, and disassembling each extracted piece of audio data into audio data and information added to the audio data. The mixing module 27 is a module for mixing pieces of audio data disassembled by the audio-data header removal module 26. The decoder 28 is a module for decoding the mixed pieces of audio data in case the audio data has been encoded.

In addition, the communication program 9 also has a command analysis module 30, a data analysis module 31 and an output-data generation module 32. The command analysis module 30 is a module for receiving a command, which has been extracted from a received packet, from the audio-data/data/command-apportioning module 24 and for determining the type of the command. On the other hand, the data analysis module 31 is amodule for receiving general data, which has been extracted from a received packet, from the audio-data/data/command-apportioning module 24 and for determining the type of the general data. The output-data generation module 32 is a module for creating information to be output to the output unit 14 if it is necessary to report the command and the general data to the user.

Moreover, the communication program 9 also comprises a coder 17, an audio-data-packet-conversion module 18, a network-packet-conversion module 19, an event analysis module 20, a command-packet-conversion module 21 and a data-packet-conversion module 22. The coder 17 is a module for encoding digital audio data output by the A/D conversion unit 16. The audio-data-packet-conversion module 18 is module for outputting encoded audio data output by the coder 17 to the packet network 1 as a packet. The network-packet-conversion module 19 is a module for adding header information to audio data, which has been converted into a packet output by the audio-data-packet-conversion module 18. The header information includes the address of a communication partner, the sequence number of the packet and the identifier of the sender. The event analysis module 20 is a module for analyzing an event entered by the user. The command-packet-conversion module 21 is a module for creating a command if the event is found out to be an event for the command concerning control of a session of the audio communication. The data-packet-conversion module 22 is a module for creating data if the event is found out to be an event for the data of another IM process.

The CPU 11 implements processes of the modules described above by execution of the communication program 9. These program modules can be stored in the storage unit 12 in advance or downloaded from another apparatus by way of the packet network 1. As another alternative, the program modules are installed into the storage unit 12 from a mountable and demountable storage medium not shown in the figure.

It is to be noted that the A/D conversion unit 16 and the D/A conversion unit 29 are each implemented by hardware even though the other components of the configuration can each be realized by either hardware or software.

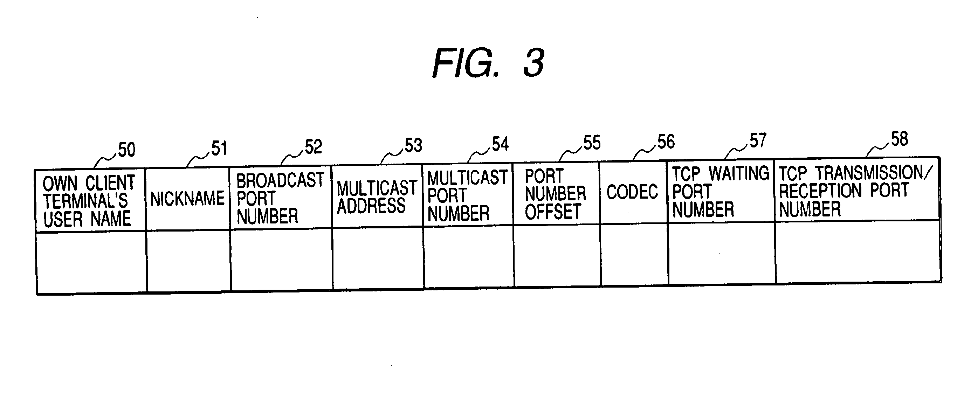

The storage unit 12 employed in the client terminal 2 is also used for storing at least management tables shown in Figs. 3 to 6.

Fig. 3 is a diagram showing a session management table including information used in control of sessions of a multi-user communication. The control of sessions of a multi-user communication is executed as part of the communication program 9. Reference numeral 50 denotes the name of a user utilizing this client terminal 2 and reference numeral 51 denotes a nickname of the user. The nickname is used in identifying the client terminal 2 and displayed on screens. Reference numeral 52 denotes a port number of a broadcast address. This port number 52 is used when transmitting and receiving an online or offline command to and from the packet network 1. Reference numeral 53 denotes a multicast address used in a multi-user communication and reference numeral 54 denotes a port number of a broadcast address. This port number 54 is used when transmitting and receiving a session control command of a multi-user communication. Reference numeral 55 denotes an offset of a port number. This offset 55 is used in communicating audio data in a multi-user communication. Reference numeral 56 denotes a usable CODEC.

An organization called the IANA (Internet Assigned Authority with a URL of http://www.iana.org/ipaddress/ip-addresses.html) is an institution for standardizing and assigning address resources used in the Internet. The address resources include IP addresses, domain names and port numbers. In accordance with an address-assigning method provided by the IANA, this client terminal 2 can have a typical IP address of (153.25.7.100). In this case, the broadcast address is (153.35.7.255) and the multicast address is an address of class D in the range (224.0.0.0 to 239.255.255.255).

That is to say, for a given network address of this client terminal 2, the multicast address is determined univocally so that the item for a broadcast address is not required in the session management table. However, a specific address determined by another address determination method can be specified explicitly. In addition, it is desirable to use a general nickname 51 that is obviously derived from a network address such as an IP address or a host name.

The offset 55 is used for specifying the port number of channel n by adding the offset 55 to the port number assigned to channel 1. However, the port number of each channel can also be specified by not using the offset 55.

In this embodiment, a channel is defined as a communication path provided for allowing fellows to hold conversations or carry out job communications. The fellows can be fellows participating in a multi-user communication, fellows doing the same job at a construction field or fellows gathering works all together.

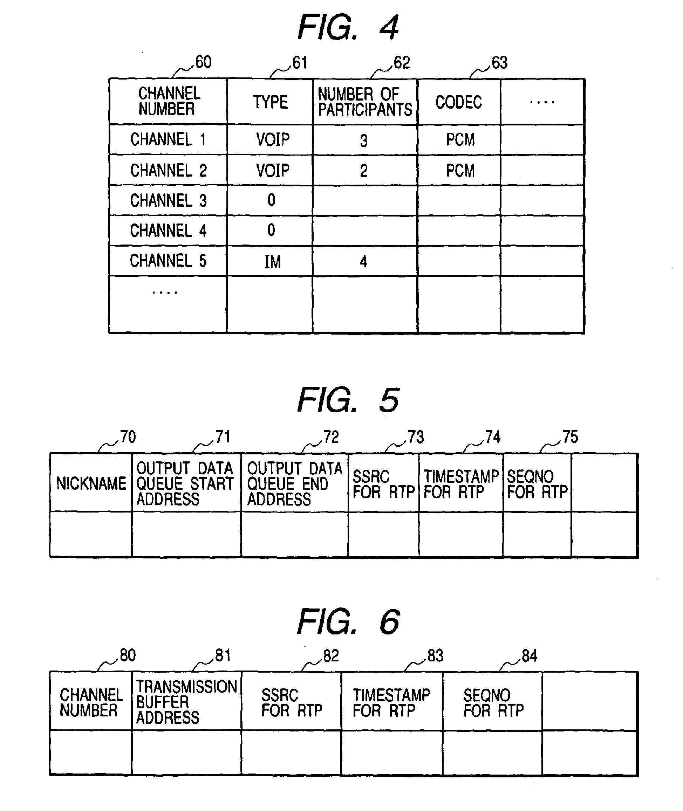

Fig. 4 is a diagram showing a channel management table including a state of participation in each channel. Reference numerals 60 and 61 denote a channel number and the type of the communication method respectively. Reference numeral 62 denotes the number of client terminals 2 participating in a channel and reference numeral 63 denotes an audio CODEC adopted for the channel.

Fig. 5 is a diagram showing a reception management table including the state of reception of an audio packet from each other client terminal 2 participating in the channel in which this client terminal 2 is participating. Reference numeral 70 denotes a nickname of the client terminal 2 participating in the channel. Reference numeral 71 denotes the start address of an output-data queue 25 assigned to this client terminal 2 and reference numeral 72 denotes the end address of the output-data queue 25. Reference numeral 73 denotes an SSRC (Synchronization Source) included in the header information of an RTP (Real-time Transport Protocol) packet, which is an audio packet according to an RTP prescribed in the RFC 1889 of the IETF. Reference numeral 74 denotes a timestamp included in the header information of the RTP packet and reference numeral 75 denotes a sequence number included in the header information of the RTP packet.

Fig. 6 is a diagram showing a transmission management table for an audio packet transmitted by this client terminal 2. Reference numeral 80 denotes the number of the channel in which this client terminal 2 is participating. Reference numeral 81 denotes the address of a transmission buffer. Reference numeral 82 denotes an SSRC included in the header information of an RTP packet transmitted by this client terminal 2. Reference numeral 83 denotes a timestamp included in the header information of the RTP packet and reference numeral 84 denotes a sequence number included in the header information of the RTP packet.

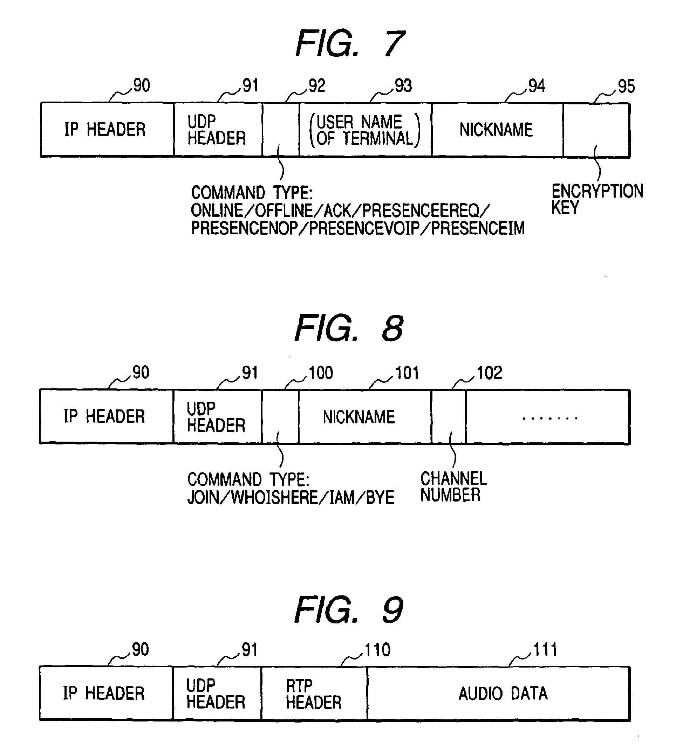

Figs. 7 to 11 are each a diagram showing a typical packet format of a command for session control executed in the communication program 9.

To be more specific, Fig. 7 is a diagram showing a command for setting and cutting a connection to the packet network 1. Reference numerals 90 and 91 denote an IP header and a UDP header respectively. Reference numeral 92 denotes the type of the command and reference numeral 93 denotes the user name of the client terminal 2. The user name is used when the type of the command is ONLINE. Reference numeral 94 denotes an area for storing a nickname.

Fig. 8 is a diagram showing a command used for session control of a multi-user communication. Reference numeral 100 denotes the type of the command. Reference numeral 101 denotes a nickname of a user utilizing the client terminal 2 originating this command. Reference numeral 102 denotes an area for storing the number of a channel to participate in a communication or a currently participating channel.

Fig. 9 is a diagram showing the format of an audio packet. Reference numeral 110 denotes an RTP header and reference numeral 111 denotes an area for storing audio data.

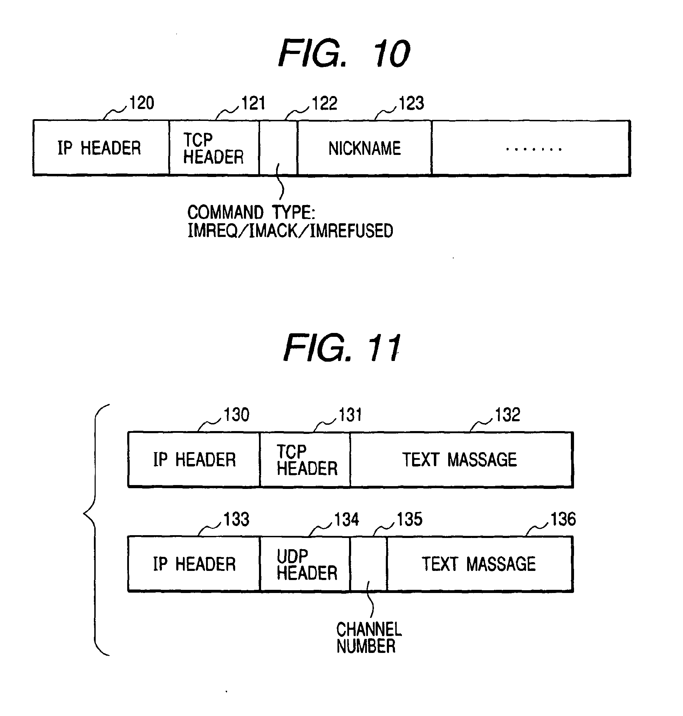

Fig. 10 is a diagram showing a command used in session control of a 1-to-1 IM. Reference numerals 120 and 121 denote an IP header and a TCP header respectively. Reference numeral 122 denotes the type of the command and reference numeral 123 denotes a nickname of a user utilizing the client terminal 2 originating this command.

Fig. 11 is a diagram showing the packet format of a text message of an IM. Reference numerals 130 and 133 each denote an IP header. Reference numerals 131 and 134 denote a TCP header and a UDP header respectively. Reference numerals 132 and 136 each denote an area for storing a text message. Reference numeral 135 denotes an area for storing a channel number of a multi-user IM also known as a group chat. The text message may include attribute information such as a character modifier.

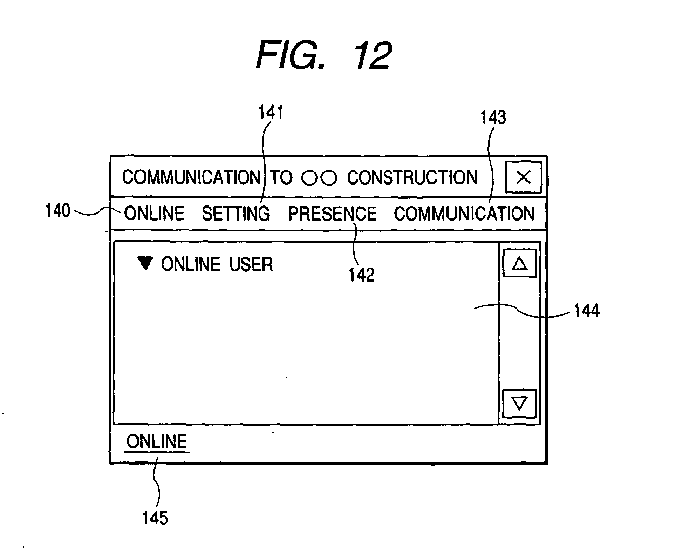

Figs. 12 to 18 are each a diagram showing a screen displayed by the output-data generation module 32 of the communication program 9 on the output unit 14.

To be more specific, Fig. 12 is a diagram showing a main screen. Reference numeral 140 denotes an online item to be selected for making a request for a connection to or a disconnection from the packet network 1. Reference numeral 141 denotes a setting item to be selected for setting address information to be used in communications. Reference numeral 142 denotes a presence item to be selected for acquiring presence information of other terminals connected to the packet network 1. Reference numeral 143 denotes a communication item represent ing a menu, from which a multi-user audio communication, an IM (that is, a 1-tol IM) or an IM conference (that is, a multi-user IM) can be selected. Reference numeral 144 denotes an area for displaying user nicknames of other client terminals 2 connected to the packet network 1. Reference numeral 145 denotes an area for displaying the communication state of this client terminal 2. In this embodiment, the information on presence indicates a state of not communicating, a state of being in a multi-user audio communication or a state of being in an IM.

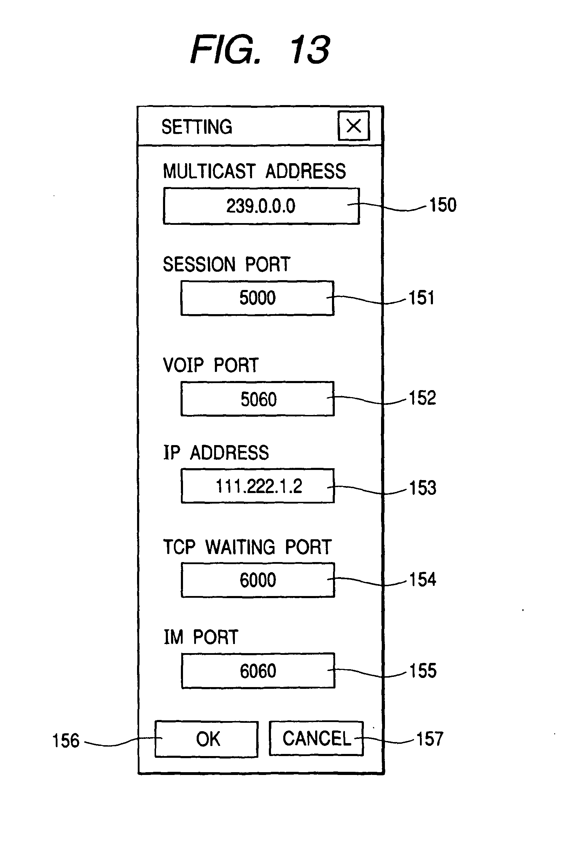

Fig. 13 is a diagram showing a configuration screen displayed as a result of selecting the setting item 141. Reference numeral 150 denotes a multicast address used in a multi-user audio communication and a group chat. Reference numeral 151 denotes a port number used in a transmission or reception of a session control command. Reference numeral 152 denotes an area to which an offset of the port number is entered. The offset is utilized in a transmission or reception of an RTP audio packet used in amulti-user audio communication . Reference numeral 153 denotes an IP address for the TCP and reference numeral 154 denotes a TCP port number. The IP address for the TCP and the TCP port number are used in a 1-to-1 IM. Reference numeral 155 denotes an area to which an offset of a port number is entered for use in a multi-user IM. Reference numeral 156 denotes an OK button to be selected by carrying out a click operation in order to store the displayed data. Reference numeral 157 denotes a Cancel button to be selected by carrying out a click operation in order to cancel the process. When this screen is displayed, data stored in advance or data stored in the previous process appears on the screen.

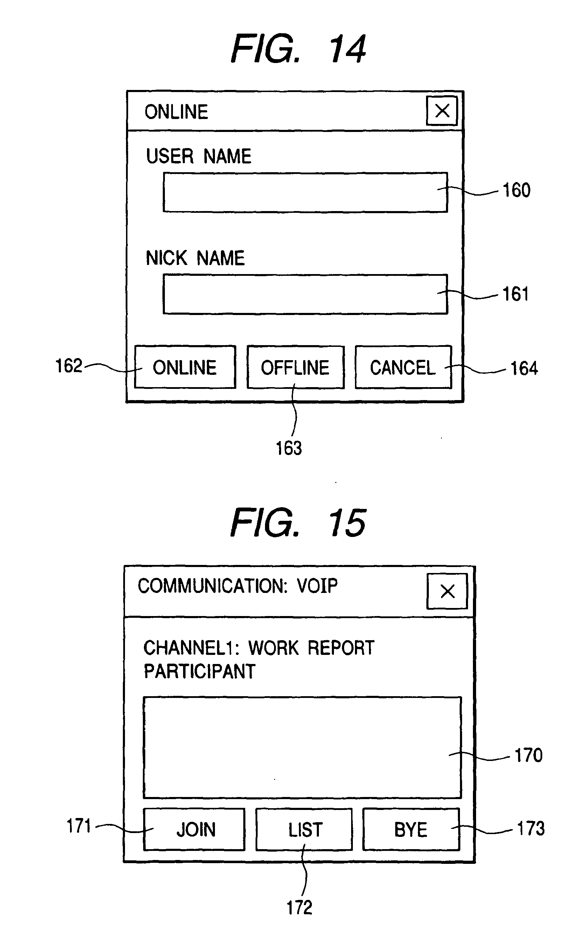

Fig. 14 is a diagram showing a screen displayed as a result of selecting the online item 140. Reference numeral 160 denotes a user name and reference numeral 161 denotes a nickname appearing on displayed screens. Reference 162 denotes an ONLine button to be selected in order to set a connection to the packet network 1 for the user name 160 and the nickname 161. Reference 163 denotes an OFFLine button to be selected in order to cut a connection to the packet network 1. Reference numeral 164 denotes a Cancel button to be selected in order to cancel the process.

Fig. 15 is a diagram showing a 'Communication: VOIP' screen displayed as a result of selecting the multi-user audio communication (VoIP) from the menu represented by the selected communication item 143 and then selecting channel 1. Reference numeral 170 denotes an area for showing a list of users participating in the channel. Reference numeral 171 denotes a Join button to be selected by the user of this client terminal 2 in order for the user to participate in the multi-user audio communication through this channel. Reference numeral 172 denotes a List button to be selected in order to make a request for a most recent list of users participating in the channel. Reference numeral 173 denotes a BYE button to be selected in order to leave the channel and end the multi-user audio communication.

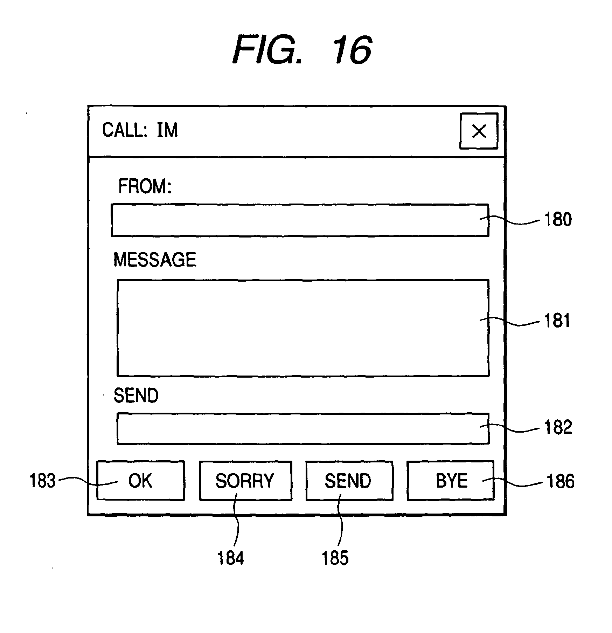

Fig. 16 is a diagram showing a 'Communication: IM' screen displayed as a result of selecting the IM, that is, the 1-to-1 IM, from the menu represented by the selected communication item 143. Reference numeral 180 denotes an area for showing a nickname of a communication partner. Reference numeral 181 denotes an area for showing a message exchanged between the user of this client terminal 2 and the communication partner. Reference numeral 182 denotes an area to which the user of this client terminal 2 enters a text. Reference numeral 183 denotes an OK button to be selected in order to transmit an IMACK command in response to a request for an IM. Reference numeral 184 denotes a SORRY button to be selected in order to transmit an IMREFUSED command as a response for turning down a request for an IM. Reference numeral 185 denotes a SEND button to be selected in order to transmit an entered message as a MESSAGE command. Reference numeral 186 denotes a BYE button to be selected in order to end the IM.

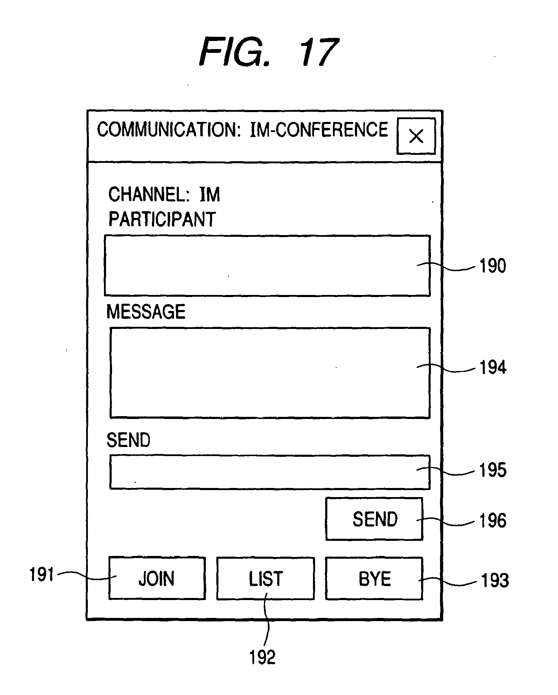

Fig. 17 is a diagram showing a 'Communication: IM-Conference' screen displayed as a result of selecting the IM-Conference, that is, the multi-user IM, from the menu represented by the selected communication item 143. Reference numeral 190 denotes an area for showing a list of users participating in the channel. Reference numeral 191 denotes a Join button to be selected by the user of this client terminal 2 in order for the user to participate in the multi-user IM through this channel. Reference numeral 192 denotes a List button to be selected in order to make a request for a most recent list of users participating in the channel. Reference numeral 193 denotes a BYE button to be selected in order to leave the channel of the multi-user IM (the group chat) in which the user has been participating and end the group chat. Reference numeral 194 denotes an area for showing a message received from a terminal participating in the multi-user IM. Reference numeral 195 denotes an area to which the user of this client terminal 2 enters a text. Reference numeral 196 denotes a SEND button to be selected in order to transmit a message entered to the area 195 as a MESSAGE command.

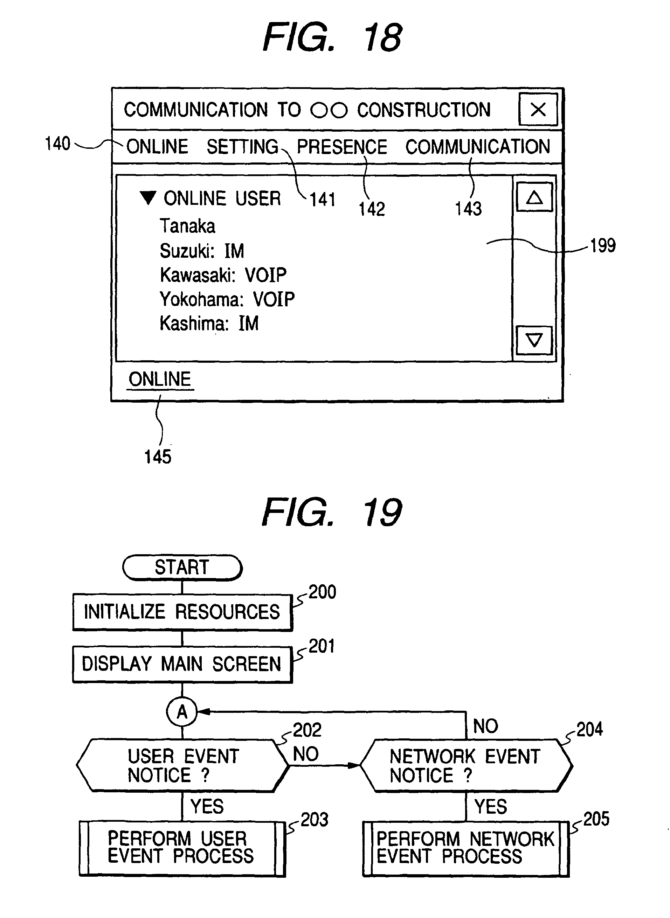

Fig. 18 is a diagram showing a main screen displayed as a result of selecting the presence item 142. Reference numeral 199 denotes an area for displaying a list of nicknames each given to an online user. An online user is a user in a state of being connected to the packet network 1. A nickname and presence information for the nickname can be added to the area 199.

Fig. 19 shows a typical sequence of the session control executed in this embodiment. When the communication program 9 installed in the client terminal 2 is invoked, the session management module 33 initializes computer resources at a step 200. For example, buffers are secured for data transmissions and receptions and a work area is allocated. Each client terminal knows information on each channel in advance. Information on a channel includes applications of the channel such as the use of the channel as a work-reporting channel, a multicast address, a port number and an offset value. At a stage the client terminal 2 is connected to the packet network 1, each channel has already been opened and no specific channel is opened or closed.

As a method to obtain information on a channel, it is possible to adopt a technique of using default values or another communication technique, which can be a method of using communication media such as a mail, a web or an IM (Instant Message) for a communication target within the same enterprise, a method of using an advertisement such as a poster for a communication target at a street corner or a method of notifying a communication target pertaining to an ad hoc network at a time a group is configured as part of construction of the ad hoc network. The group can be a group of people interested in OO or a group of people in their twenties, who are present in the area, to mention a few.

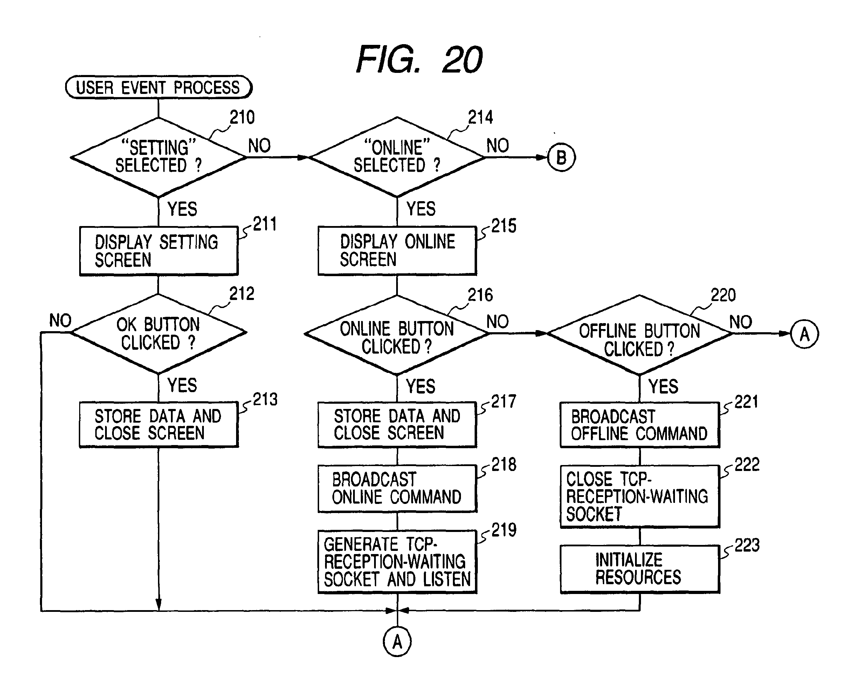

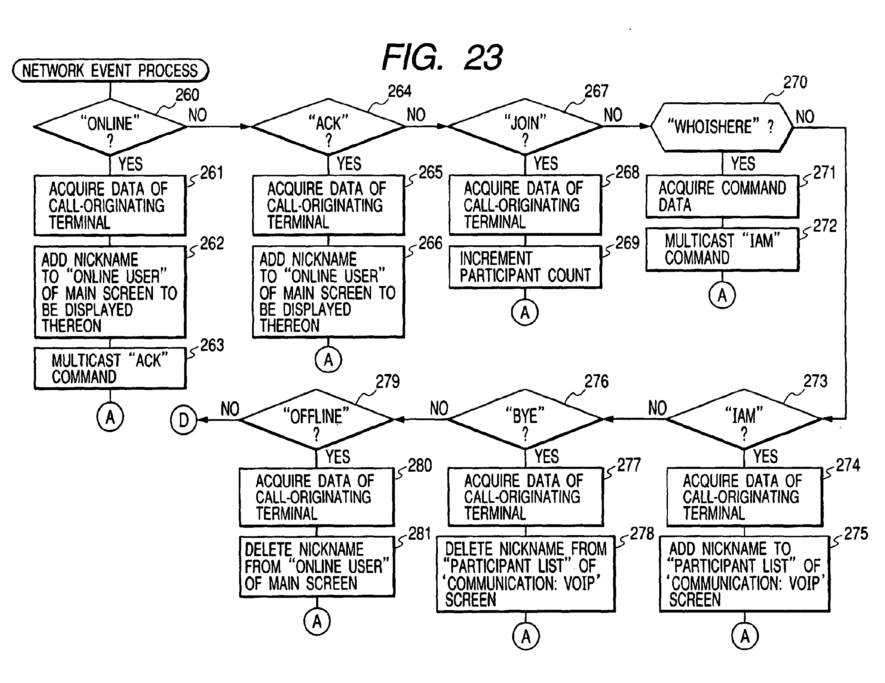

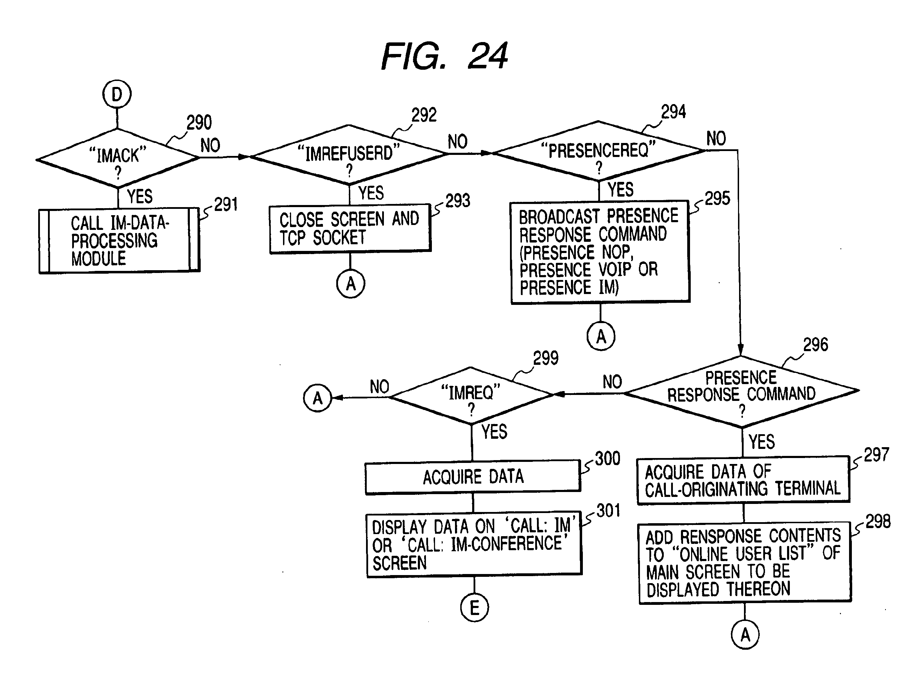

At the next step 201, the session management module 33 displays the main screen shown in Fig. 12 and enters a state of waiting for an event to be entered by the user or a command to be received from another client terminal 2 by way of the packet network 1. As an event is entered or a command is received, the flow of the sequence goes on to a step 202 to determine whether or not an event entered by the user has been detected. If the result of the determination is Yes, the flow of the sequence goes on to a step 203 at which a user-event process is carried out in accordance with a sequence shown in Figs. 20 to 22. Otherwise, the flow of the sequence goes on to a step 204 to determine whether or not a network event has been detected. If the result of the determination is Yes, the flow of the sequence goes on to a step 205 at which a network-event process is carried out in accordance with a sequence shown in Figs. 23 and 24.

Figs. 20 to 22 show a typical sequence of the user-event process.

At a step 210 of the sequence shown in Fig. 20, the session management module 33 determines whether or not the event entered by the user is an operation to select the setting item 141. If the result of the determination is Yes, the flow of the sequence goes on to a step 211 at which the session management module 33 displays the configuration screen shown in Fig. 13 on the output unit 14. Then, at the next step 212, the session management module 33 determines whether or not the OK button 156 is selected in a state of waiting for an input to be entered by the user. If the OK button 156 is selected to indicate that an input has been entered, that is, if the result of the determination is Yes, the flow of the sequence goes on to a step 213 at which the session management module 33 stores the entered input data displayed on the configuration screen in the session management table for a multi-user communication *and closes the screen*. The session management table is shown in Fig. 3. Then, the session management module 33 enters a state of waiting for a next event.

If the event is not an operation to select the setting item 141, on the other hand, the flow of the sequence goes on to a step 214 to determine whether or not the event entered by the user is an operation to select the online item 140. If the result of the determination is Yes, the flow of the sequence goes on to a step 215 at which the session management module 33 displays the online screen shown in Fig. 14. Then, at the next step 216, the sessionmanagement module 33 determines whether or not the ONLine button 162 has been selected. If the result of the determination is Yes, the flow of the sequence goes on to a step 217 at which the session management module 33 stores the data displayed on the online screen in the session management table for a multi-user communication and closes the screen. As described above, the session management table is shown in Fig. 3. Then, at the next step 218, the command-packet-conversion module 21 generates an ONLINE command to be broadcasted to a port number of a broadcast address set in advance. In this way, a connection to the packet network 1 is made, allowing a communication with another user receiving the ONLINE command to be carried out. Then, at the next step 219, the session management module 33 generates a TCP-reception-waiting socket used in the 1-to-1 IM and then enters a state of waiting for such a reception.

If the event entered by the user is not an operation to select the online item 140, on the other hand, the flow of the sequence goes on to a step 220 to determine whether or not the OFFLine button 163 has been selected. If the result of the determination is Yes, the flow of the sequence goes on to a step 221 at which the command-packet-conversion module 21 generates and broadcasts an OFFLINE command including information on the sender. In this way, a connection to the packet network 1 is cut. Then, at the next step 222, the session management module 33 closes the TCP-reception-waiting socket generated at the step 219. Subsequently, at the next step 223, the session management module 33 releases the resources secured at the step 200.

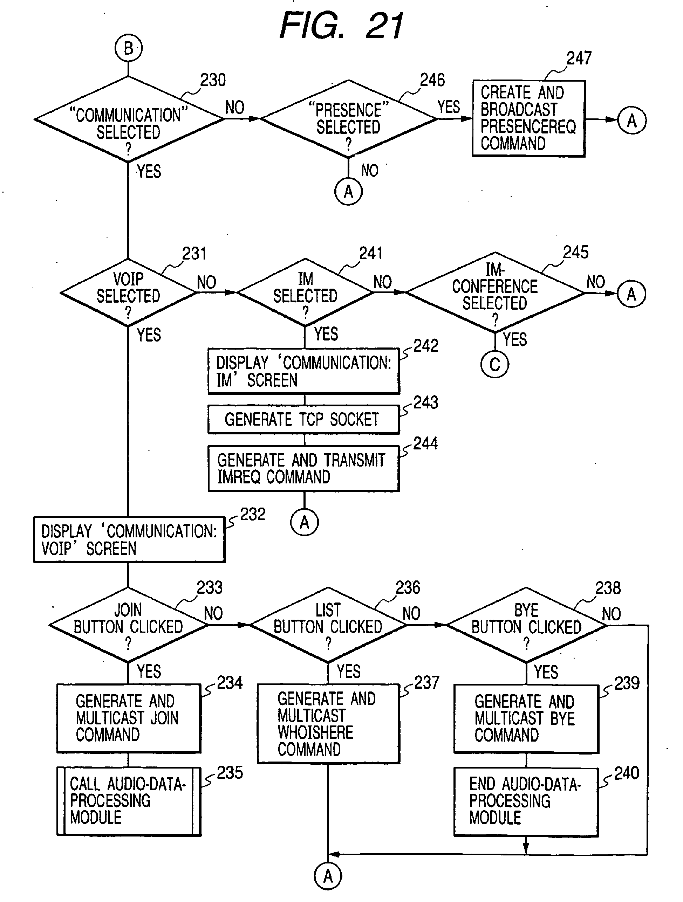

If the event entered by the user is not an operation to select the OFFLine button 163, on the other hand, the flow of the sequence goes on to a step 230 of the sequence shown in Fig. 21 to determine whether or not the event entered by the user in the state of being connected to the packet network 1 is an operation to select the communication item 143. If the result of the determination is Yes, the flow of the sequence goes on to a step 231 to determine whether or not the VOIP has been selected from a menu displayed as a result of the selection of the communication item 143. If the result of the determination is also Yes, the flow of the sequence goes on to a step 232 at which the session management module 33 displays the 'Communication: VOIP' screen shown in Fig. 15. Then, the flow of the sequence goes on to a step 233 to determine whether or not the Join button 171 has been selected. If the result of the determination is Yes, the flow of the sequence goes on to a step 234 at which the command-packet-conversion module 21 generates a JOIN command and multicasts the command to a port number provided for a session control command and included in a multicast address stored in advance in this client terminal 2. Then, at the next step 235, audio data is transmitted and received. A client terminal 2 existing at the multicast address and participating in the multicast group serves as a communication partner receiving and transmitting audio data.

If the result of the determination indicates that the Join button 171 has not been selected, on the other hand, the flow of the sequence goes on to a step 236 to determine whether or not the List button 172 has been selected. If the result of the determination is Yes, the flow of the sequence goes on to a step 237 at which the command-packet-conversion module 21 generates a WHOISHERE command and multicasts the command to a destination corresponding to the number of a channel. The WHOISHERE command includes the number of the channel and serves as a command for making a request for a list of users participating in the channel. If the result of the determination is No, on the other hand, the flow of the sequence goes on to a step 238 to determine whether or not the BYE button 173 has been selected. If the result of the determination is Yes, the flow of the sequence goes on to a step 239 at which the command-packet-conversion module 21 generates and multicasts a BYE command. Then, at the next step 240, a termination process of the audio processing module is carried out.

If the VOIP was not selected, on the other hand, the flow of the sequence goes on to a step 241 to determine whether or not the IM has been selected from the menu represented by the communication item 143. If the result of the determination is Yes, the flow of the sequence goes on to a step 242 at which the session management module 33 displays the 'Communication: IM' screen shown in Fig. 16. Then, at the next step 243, the session management module 33 generates a TCP socket for transmitting and receiving an IM text message. Subsequently, at the next step 244, the command-packet-conversion module 21 generates an IMREQ command and transmits the command to a communication-requesting partner, which has been selected by another user connected to the packet network 1, by using the TCP pocket generated at the step 243. The IMREQ command is a command used to make a request for a start of a 1-to-1 IM.

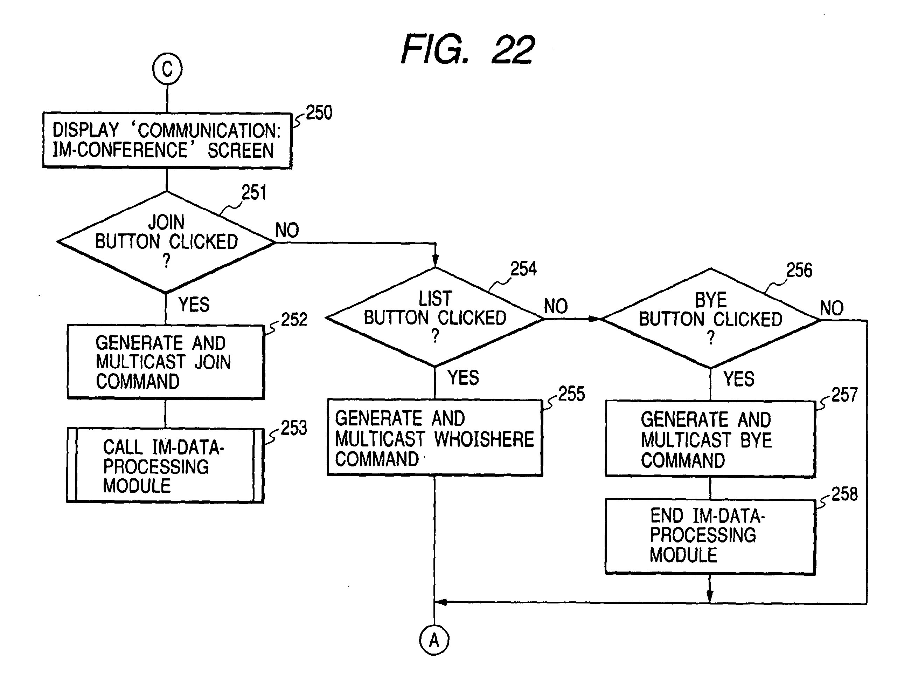

If the result of the determination indicates that the IM was not selected, on the other hand, the flow of the sequence goes on to a step 245 to determine whether or not the IM-Conference has been selected from the menu represented by the communication item 143. If the result of the determination is Yes, the session management module 33 carries out an IM-Conference process represented by the sequence shown in Fig. 22. If the event entered by the user is not an operation to select the communication item 143, on the other hand, the flow of the sequence goes on to a step 246 to determine whether or not the presence item 142 of the main screen has been selected. If the result of the determination is Yes, the flow of the sequence goes on to a step 247 at which the command-packet-conversion module 21 generates and broadcasts a PRESENCEREQ command, which is a command making a request for an acquisition of information on the sender and information on presence.

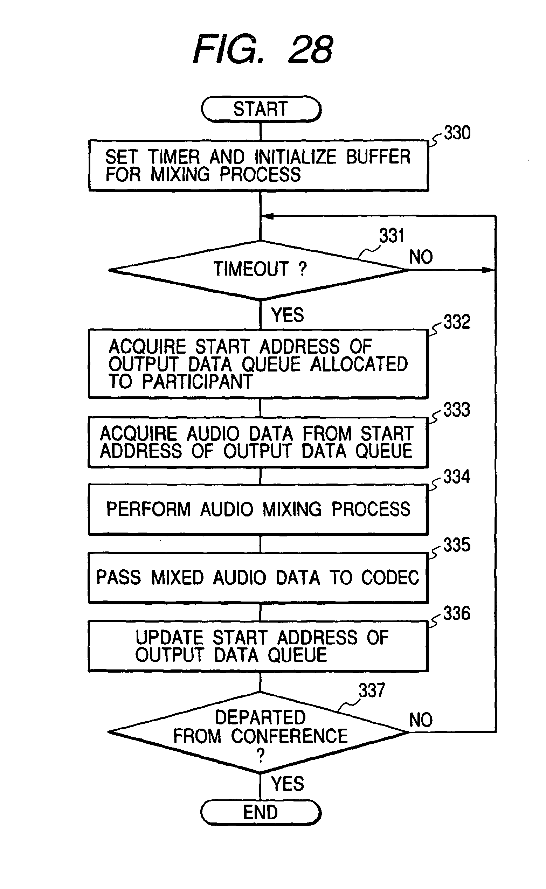

If the determination result obtained at the step 245 indicates that the IM-Conference has been selected, the flow of the sequence goes on to a step 250 of the sequence shown in Fig. 22. At this step, the session management module 33 displays the 'Communication: IM-Conference' screen. Then, the flow of the sequence goes on to a step 251 to determine whether or not the JOIN button 191 has been selected. If the result of the determination is Yes, the flow of the sequence goes on to a step 252 at which the command-packet-conversion module 21 creates a JOIN command including the information on the sender and the number of the channel, broadcasting the command to a port number, which is included in a multicast address set in advance and is provided for a session control command. Then, at the next step 253, the IM-data-processing module comprising the data-packet-conversion module 22 and the data analysis module 31 carries out a process represented by a sequence shown in Fig. 28.

If the result of the determination indicates that the JOIN button 191 was not selected, on the other hand, the flow of the sequence goes on to a step 254 to determine whether or not the List button 192 has been selected. If the result of the determination is Yes, the flow of the sequence goes on to a step 255 at which the command-packet-conversion module 21 creates a WHOISHERE command including the information on the sender and the number of the channel, multicasting the command.

If the result of the determination indicates that the List button 192 was not selected, on the other hand, the flow of the sequence goes on to a step 256 to determine whether or not the BYE button 193 has been selected. If the result of the determination is Yes, the flow of the sequence goes on to a step 257 at which the command-packet-conversion module 21 creates a BYE command including the information on the sender and multicasts the command. Then, at the next step 258, a termination process of the IM-data-processing processing module is carried out.

Figs. 23 and 24 shows a sequence of a process carried out for a network event.

The sequence begins with a step 260 of the sequence shown in Fig. 23 to determine whether or not a packet received from the packet network 1 is an ONLINE command. If the result of the determination is Yes, the flow of the sequence goes on to a step 261 at which the command analysis module 30 acquires user information included in the command. Then, at the next step 262, the command analysis module 30 adds a nickname to an online-user area on the main screen shown in Fig. 12 to be displayed thereon. Subsequently, at the next step 263, the command analysis module 30 creates an ACK command serving as a response, which also includes information on this client terminal 2 and indicates that the user of this client terminal 2 is participating in the communication, and broadcasts the command.

In this way, the client terminal 2 transmitting the ONLINE command receives a response from each client terminal 2 connected to the packet network 1 and is thus capable of knowing users connected to the packet network 1. As an alternative, only one of the client terminals 2 connected to the packet network 1 transmits a response along with a list of client terminals 2 connected to the packet network 1. In this case, it is not necessary for the other client terminals 2 connected to the packet network 1 to transmit a response.

If the result of the determination indicates that the packet received from the packet network 1 is not an ONLINE command, on the other hand, the flow of the sequence goes on to a step 264 to determine whether or not the packet received from the packet network 1 is an ACK command. If the result of the determination is Yes, the flow of the sequence goes on to a step 265 at which the command analysis module 30 acquires user information included in the command. Then, at the next step 266, the command analysis module 30 adds a nickname to an online-user area on the main screen shown in Fig. 12 to be displayed thereon in case the user of the client terminal 2 transmitting the ACK command has not been displayed, that is, in case this client terminal 2 is a client terminal 2 transmitting an ONLINE command.

If the result of the determination indicates that the packet received from the packet network 1 is not an ACK command, on the other hand, the flow of the sequence goes on to a step 267 to determine whether or not the packet received from the packet network 1 is a JOIN command. If the result of the determination is Yes, the flow of the sequence goes on to a step 268 at which the command analysis module 30 acquires information such as a nickname and the number of the channel. Then, at the next step 269, the number of users participating in the channel, which the user transmitting this JOIN command desires to participate in, is incremented. The number of such users is included in the channel management table shown in Fig. 4.

If the result of the determination indicates that the packet received from the packet network 1 is not a JOIN command, on the other hand, the flow of the sequence goes on to a step 270 to determine whether or not the packet received from the packet network 1 is a WHOISHERE command. If the result of the determination is Yes, the flow of the sequence goes on to a step 271 at which the command analysis module 30 acquires the number of the channel from the WHOISHERE command. Then, at the next step 272, the command analysis module 30 creates and multicasts an IAM command indicating that this client terminal 2 is participating in the channel in case this client terminal 2 is participating in the channel. In this way, the nickname area 144 of the client terminal 2 transmitting the WHOISHERE command displays the nickname of the user of this client terminal 2 transmitting the IAM command. If this client terminal 2 is participating in the channel, on the other hand, such an IAM command is not transmitted.

If the result of the determination indicates that the packet received from the packet network 1 is not a WHOISHERE command, on the other hand, the flow of the sequence goes on to a step 273 to determine whether or not the packet received from the packet network 1 is an IAM command. If the result of the determination is Yes, the flow of the sequence goes on to a step 274 at which the command analysis module 30 acquires information on the user transmitting the IAM command. Then, at the next step 275, a nick name is added to the area 170 to be displayed therein if the user transmitting the IAM command has not been displayed on the area 170, which is an area for displaying a list of participants on the 'Communication: VOIP' screen shown in Fig. 15.

If the result of the determination indicates that the packet received from the packet network 1 is not an IAM command, on the other hand, the flow of the sequence goes on to a step 276 to determine whether or not the packet received from the packet network 1 is a BYE command. If the result of the determination is Yes, the flow of the sequence goes on to a step 277 at which the command analysis module 30 acquires information on the user transmitting the BYE command. Then, at the next step 278, the nickname of the user transmitting the BYE command is deleted from the list of participants, which appears on the 'Communication: VOIP' screen shown in Fig. 15.

If the result of the determination indicates that the packet received from the packet network 1 is not a BYE command, on the other hand, the flow of the sequence goes on to a step 279 to determine whether or not the packet received from the packet network 1 is an OFFLINE command. If the result of the determination is Yes, the flow of the sequence goes on to a step 280 at which the command analysis module 30 acquires information on the user transmitting the OFFLINE command. Then, at the next step 281, the nickname of the user transmitting the BYE command is deleted from the list of online users, which appears on the main screen shown in Fig. 12.

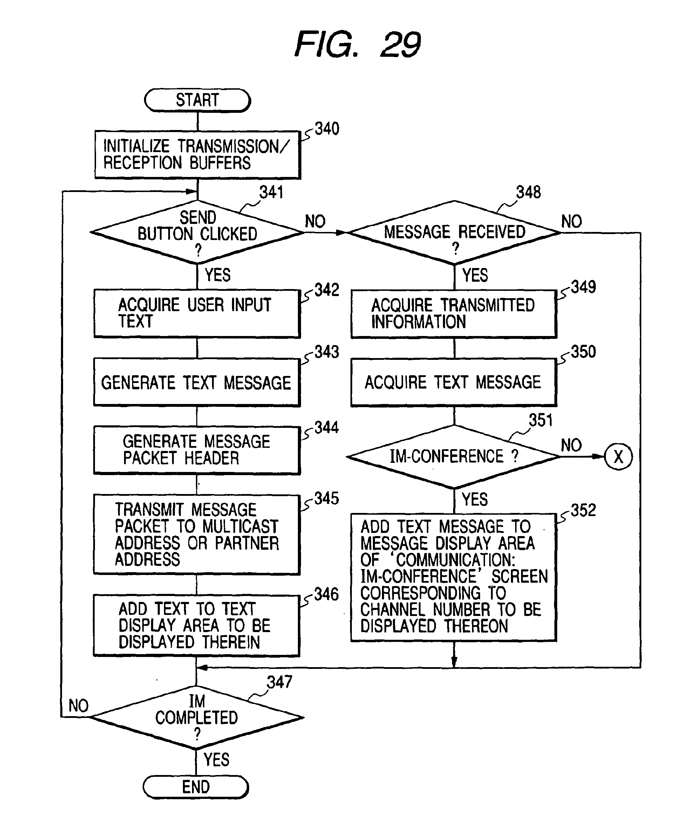

If the result of the determination indicates that the packet received from the packet network 1 is not an OFFLINE command, on the other hand, the flow of the sequence goes on to a step 290 of the sequence shown in Fig. 24 to determine whether or not the packet received from the packet network 1 is an IMACK command. If the result of the determination is Yes, the flow of the sequence goes on to a step 291 at which the IM-data-processing module carries out a process represented by a sequence shown in Fig. 29.

If the result of the determination indicates that the packet received from the packet network 1 is not an IMACK command, on the other hand, the flow of the sequence goes on to a step 292 to determine whether or not the packet received from the packet network 1 is an IMREFUSED command. If the result of the determination is Yes, the flow of the sequence goes on to a step 293 at which the 'Communication: IM' screen and the TCP socket generated at the step 243 are closed.

If the result of the determination indicates that the packet received from the packet network 1 is not an IMREFUSED command, on the other hand, the flow of the sequence goes on to a step 294 to determine whether or not the packet received from the packet network 1 is a PRESENCEREQ command. If the result of the determination is Yes, the flow of the sequence goes on to a step 295 at which the present communication status of this client terminal 2 is examined. If no data is being communicated in particular, a PRESENCE/NOP command is created. If this client terminal 2 is carrying out a multi-user audio communication, a PRESENCE/VOIP command is created. If this client terminal 2 is carrying out an IM, a PRESENCE/IM command is created. The created command is then broadcasted.

If the result of the determination indicates that the packet received from the packet network 1 is not a PRESENCEREQ command, on the other hand, the flow of the sequence goes on to a step 296 to determine whether or not the packet received from the packet network 1 is a PRESENCE/NOP, PRESENCE/VOIP or PRESENCE/IM command. If the result of the determination is Yes, the flow of the sequence goes on to a step 297 at which information on the terminal transmitting this command is acquired. Then, at the next step 298, the user of the terminal transmitting this command is added to the list of online users, which appears on the main screen shown in Fig. 12, to be displayed thereon.

If the result of the determination indicates that the packet received from the packet network 1 is not a PRESENCE/NOP, PRESENCE/VOIP or PRESENCE/IM command, on the other hand, the flow of the sequence goes on to a step 299 to determine whether or not the packet received from the packet network 1 is an IMREQ command. If the result of the determination is Yes, the flow of the sequence goes on to a step 300 at which information on the originator of the IMREQ command and text data are acquired from the command. Then, at the next step 301, the information and the text data are displayed respectively on the originator-information display area 180 and the text display area 181, which are parts of the 'Communication: IM' screen.

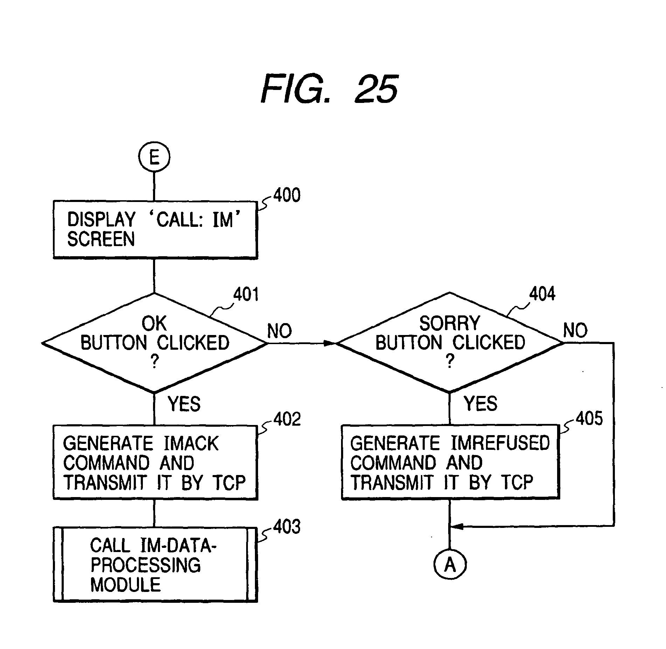

Fig. 25 shows a sequence of a process, which is carried out *as the continuation of step 301* when the event entered by the user is an IMREQ command. The sequence begins with a step 400. At this step, the 'Communication: IM' screen has been displayed. The flow of the sequence then goes on to a step 401 to determine whether or not the user has selected the OK button 183 appearing on the screen shown in Fig. 16. If the result of the determination is Yes, the flow of the sequence goes on to a step 402 at which an IMACK command including a nickname and a text is transmitted in accordance with the TCP. Then, at the next step 403, the IM-data- processing module is activated. If the result of the determination is No, on the other hand, the flow of the sequence goes on to a step 404 to determine whether or not the user has selected the SORRY button 184 appearing on the screen shown in Fig. 16. If the result of the determination is Yes, the flow of the sequence goes on to a step 405 at which an IMEFUSED command including a nickname and an IM-request rejection response is transmitted in accordance with the TCP.

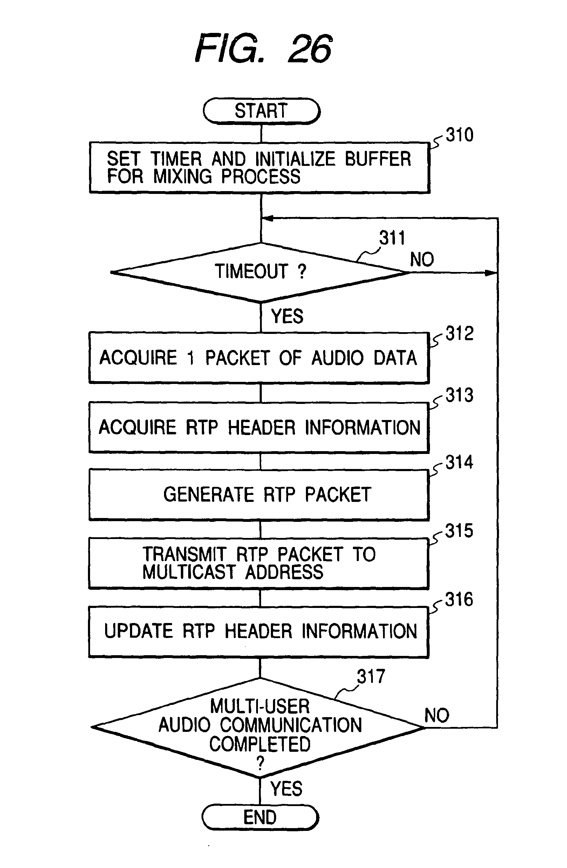

Fig. 26 is a diagram showing the sequence of an audio transmission process carried out by the audio-processing module comprising the coder 17 and the audio-data-packet- conversion module 18. When the audio-processing module is invoked, a timer for determining a timing to fetch audio data is set and a buffer provided for an audio mixing process is allocated at a step 310. Then, the flow of the sequence goes on to a step 311 to enter a wait state by determining whether or not a timeout has occurred. As a predetermined period of time lapses as evidenced by the event of a timeout, that is, as the result of the determination indicates Yes, the flow of the sequence goes on to a step 312 at which data with an amount of 1 packet is read in from the coder 17. Then, at the next step 313, RTP-header information is acquired from the transmission management table. Subsequently, at the next step 314, an RTP packet is generated. Then, at the next step 315, the RTP packet is transmitted to a multicast address. Subsequently, at the next step 316, the RTP-header information is updated. Then, the flow of the sequence goes on to a step 317 to determine whether or not the user has selected the BYE button. If the result of the determination is No, the flow of the sequence goes back to the step 311 to repeat the process described above. The process is carried out repeatedly till the user selects the BYE button. As the result of the determination becomes Yes, the execution of the audio transmission process is ended.

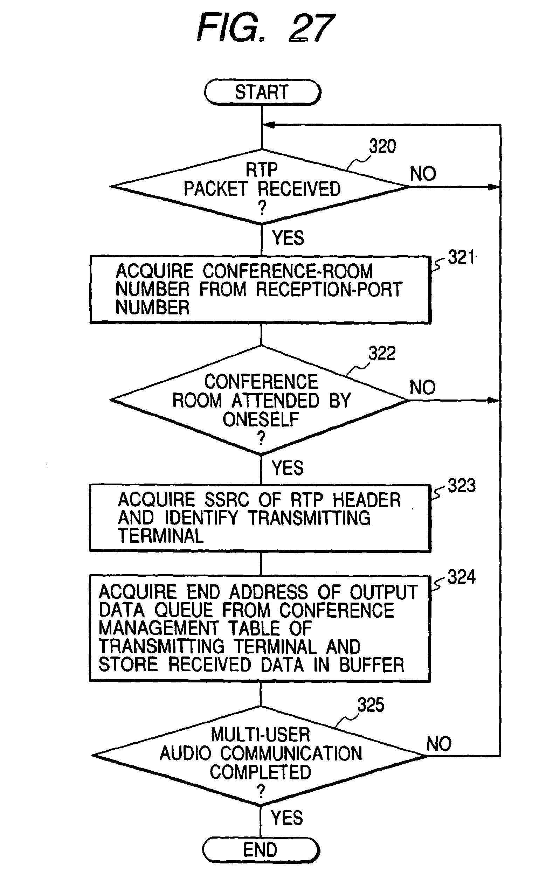

Fig. 27 is a diagram showing the sequence of an audio reception process carried out by the audio-processing module. As the audio-processing module is invoked, the sequence begins with a step 320 to open a port for receiving an RTP packet and enter a state of waiting for an RTP packet to arrive. As an RTP packet is received, the flow of the sequence goes on to a step 321 at which a port number for receiving the RTP packet is identified. Then, the flow of the sequence goes on to a step 322 to determine whether or not a channel for which the RTP packet has been destined is a channel joined by this client terminal 2 itself. If the result of the determination is Yes, the flow of the sequence goes on to a step 323 at which the SSRC is extracted from the header information of the RTP packet and used in identifying the client terminal 2 transmitting the packet. Then, at the next step 324, the end address of an output-data queue allocated to a client terminal 2 other than this client terminal 2 is acquired and the received data is stored at the end address in a buffering operation. Then, the flow of the sequence goes on to a step 325 to determine whether or not the user has selected the BYE button. If the result of the determination is No, the flow of the sequence goes back to the step 320 to repeat the process described above. The process is carried out repeatedly till the user selects the BYE button. As the result of the determination becomes Yes, the execution of the audio reception process is ended.

Fig. 28 is a diagram showing the sequence of an audio-data reproduction process carried out by the audio-processing module. As the audio-processing module is invoked, the sequence begins with a step 330 to set a timer counting for a timing to pass audio data to the decoder 28 and to allocate a buffer to be used in processing to mix a plurality of pieces of audio data. Then, the flow of the sequence goes on to a step 331 to enter a wait state by determining whether or not a timeout has occurred. As a timeout occurs, that is, as the result of the determination indicates Yes, the flow of the sequence goes on to a step 332 to read in the start address of each output-data queue 25 allocated to a participant of a conference attended by this client terminal 2 itself. Then, at the next step 333, audio data is acquired from the start address of each output-data queue 25. Subsequently, at the next step 334, pieces of audio data are mixed. Then, at the next step 335, the mixed audio data is supplied to the decoder 28 for reproduction. Subsequently, at the next step 336, the start address of each output-data queue 25 is incremented as a preparation for the next reproduction processing. Then, the flow of the sequence goes on to a step 337 to determine whether or not the user has selected the BYE button. If the result of the determination is No, the flow of the sequence goes back to the step 331 to repeat the process described above. The process is carried out repeatedly till the user selects the BYE button. As the result of the determination becomes Yes, the execution of the audio-data reproduction process is ended.

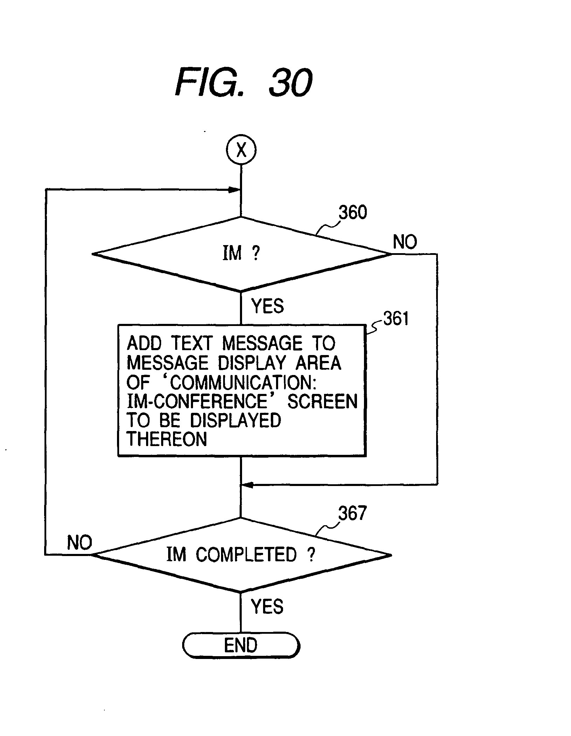

Figs. 29 and 30 show the sequence of a process carried out by the IM-data processing module. As the IM-data processing module is activated, buffers for transmitting, receiving and displaying a text message are allocated at a step 340. Then, the flow of the sequence goes on to a step 341 to determine whether or not the user has selected the Send button displayed on the 'Communication: IM' or 'Communication: IM-Conference' screen. If the result of the determination is Yes, the flow of the sequence goes on to a step 342 at which text data entered to the user text input area 181 or 194 is acquired. Then, at the next step 343, a text message is generated. Subsequently, at the next step 344, a MESSAGE command header is added to the text message to generate a MESSAGE command. Then, at the next step 345, the MESSAGE command is transmitted to the address of a communication partner by adoption of the TCP in the case of a 1-to-1 IM. In the case of a multi-user IM (or a group chat), on the other hand, the MESSAGE command is transmitted to a port number and a multicast address corresponding to the channel. Subsequently, at the next step 346, the transmitted text message is added to the user text input area 181 or 194 to be displayed therein.

Then, the flow of the sequence goes on to a step 347 to determine whether or not the user has selected the BYE button. If the result of the determination is No, the flow of the sequence goes back to the step 341 to repeat the process described above. The process is carried out repeatedly till the user selects the BYE button. As the result of the determination becomes Yes, the process carried out by IM-data-processing module is ended.

If the user did not select the Send button, on the other hand, the flowof the sequence goes back to the step 348 to determine whether or not a MESSAGE command has been received from a communication partner or a MESSAGE command destined for a multicast address has been received. If the result of the determination is Yes, the flow of the sequence goes on to a step 349 to acquire information on a terminal transmitting this MESSAGE command from this command. Then, at the next step 350, a text message included in this MESSAGE command is acquired. Subsequently, the flow of the sequence goes on to a step 351 to determine whether or not the session to which the MESSAGE command pertains is a session of a multi-user IM (or a group chat) and not a session of a 1-to-1 IM. If the result of the determination is Yes indicating that the session is a session of a group chat, the flow of the sequence goes on to a step 352 at which the received text message is added to the text-message display area 194 appearing on the 'Communication: IM-Conference' screen along with a nickname of the user utilizing a terminal transmitting the text message to be displayed thereon. If the result of the determination is No, on the other hand, the flow of the sequence goes on to a step 360 of the sequence shown in Fig. 30 to determine whether or not the session to which the MESSAGE command pertains is a session of a 1-to-1 IM. If the result of the determination is Yes, the flow of the sequence goes on to a step 361 at which the received text message is added to the text-message display area 181 appearing on the 'Communication: IM' screen along with a nickname of the user utilizing a terminal transmitting the text message to be displayed thereon.

In the embodiment described above, an ad hoc network is assumed as the packet network 1. However, the present invention can also be applied to another network if the network is capable of carrying out multicast communications. For example, the present invention can be applied to a contemporary multicasting network so configured that a client terminal issues an IGMP (Internet Group Membership Protocol) message to a router, which then transmits multicast data to the client terminal. The IGMP is a protocol for allowing a client terminal to participate in a multicast service.

In accordance with the embodiment described above, even in an environment including no servers, it is possible to carry out a multi-user communication, a 1-to-1 IM and a multi-user IM.

## Claims

1. A distributed type communication system comprising a plurality of terminals (2) connected to each other through a communication network (1) capable of carrying out multicast communication, wherein each of said terminals comprises:
means (218, 219) for broadcasting a connection command to connect the terminal to said communication network (1), using a predetermined broadcast address as a destination address of the command;
means (230, 231, 241, 245) for specifying a communication mode to be adopted for the terminal in response to a user's input operation onto a display screen for designating one of a plurality of selectable communication modes;
means (232 to 235, 242 to 244, 250 to 253) for communicating information with at least one other of said terminals in said specified communication mode; and
means (220 to 222, 238, 239, 256, 257) for transmitting, a disconnection command to said broadcast address in order to disconnect the terminal from said communication network (1),
**characterised in that** each of said terminals (2) further comprises:
means (247) for broadcasting a presence-information-requesting command to said broadcast address in order to request the other terminals connected to said communication network (1) to reply presence information indicating a user identifier and a communication mode of the respective terminals after the connection to said communication network; and
means (296 to 298) for receiving response commands to said presence-information-requesting command from said other terminals and outputting on said display screen the user identifier and communication mode of said other terminals indicated by the presence information in said response commands.

2. The system of claim 1, wherein said specified communication mode is one of:
an audio communication with at least one of said other terminals through one or more multi-user communication channels each having been assigned a predetermined multicast address previously,
an exchange of text messages with plural other ones of said terminals through multi-user communication channels; and
an exchange of text messages with a selected other one of said terminals.

3. The system of claim 2, wherein each of said terminals (2) further comprises:
means (260 to 263) for broadcasting a response command indicating address information of the terminal in response to a connection command broadcast from any other one of said terminals to said communication network (1).

4. The system of claim 3, wherein each of said terminals (2) further comprises:
means (294, 295) for broadcasting a response command to said broadcast address when receiving a presence-information-requesting command from any other one of said terminals, said response command indicating a user identifier and communication mode of the terminal.

5. The system of claim 2, wherein each of said terminals (2) further comprises:
audio input means (13);
means (20 to 22, 233 to 240) for selectively multicasting, using a predetermined multicast address as a destination address in said audio communication with at least one other of said terminals through which the terminal wishes to participate in the audio communication, a departure command indicating a departure from the audio communication, and an audio packet including audio data acquired by said audio input means (13);
means (23 to 25) for receiving audio packets transmitted with said multicast address from any one of said other terminals; and
means (26 to 29) mixing audio data extracted from audio packets received from any one of said other terminals, and outputting the mixed audio data to audio output means.

6. The system of claim 2, wherein each of said terminals (2) further comprises:
means (253 to 255, 236, 237) for multicasting an inquiry command for inquiring about information on users participating in a communication performed through one of said multi-user communication channels; and
means (270 to 272) for multicasting a command including identification information of the terminal to said multi-user communication channel in response to a inquiry command received from the multi-user communication channel, if the terminal is participating in the communication through said multi-user communication channel.

7. The system of claim 2, wherein each of said terminals (2) further comprises:
means (253, 340) for exchanging text messages with one other of said terminals using TCP; and
means (243, 244, 340) for exchanging text messages with plural ones of said other terminals using UDP.

8. The system of claim 4, wherein each of said terminals (2) comprises:
means (30, 299) for waiting for a request to exchange text messages from any other one of said terminals after completing the connection to said communication network (1),
means (241 to 244) for transmitting, when requested from a user of the terminal to exchange text messages by designating information on a communication partner, a command requesting to exchange text messages to one of said other terminals having an address specified from the designated information on the communication partner;
means (14, 299 to 301, 400 to 405) for outputting on the display screen of the terminal, when a command requesting to exchange text messages is received from any one of said other terminals, information on the requesting terminal specified from the requesting command received, transmitting a response command to acknowledge the request if the user of the terminal replies an acceptance of the request, and transmitting a response command to reject the request if said user replies a rejection of the request; and
means (220 to 223) for transmitting a command to terminate the exchange of text messages to one of said other terminals to be the communication partner, when the user instructs to end the exchange of text messages.

9. The system of claim 4, wherein said response command includes, as an identifier of said communication mode, one of:
an identifier indicating that the terminal is in a state of no communications;
an identifier indicating that the terminal is in a state of audio communication with at least one of said other terminals; and
an identifier indicating that the terminal is in a state of exchanging text messages with at least one of said other terminals.

## Patentansprüche

1. Verteiltes Kommunikationssystem mit mehreren Endstellen (2), die durch ein Kommunikationsnetz (1) miteinander verbunden sind, das zum Durchführen von Multicast-Kommunikation ausgelegt ist, wobei jede der Endstellen aufweist:
eine Einrichtung (218, 219) zum Senden eines Verbindungsbefehls, um die Endstelle an das Kommunikationsnetz (1) anzuschließen, wobei eine vorbestimmte Sendeadresse als Zieladresse des Befehls verwendet wird;
eine Einrichtung (230, 231, 241, 245) zum Spezifizieren eines Kommunikationsmodus zur Übernahme durch die Endstelle in Reaktion auf eine Benutzer-Eingabeoperation auf einem Anzeigeschirm zum Bestimmen eines von mehreren wählbaren Kommunikationsmodi;
eine Einrichtung (232 bis 235, 242 bis 244, 250 bis 253) zum Kommunizieren von Information mit wenigstens einer anderen der Endstellen in dem spezifizierten Kommunikationsmodus; und
eine Einrichtung (220 bis 222, 238, 239, 256, 257) zum Übertragen eines Trennbefehls zu der Sendeadresse, um die Endstelle von dem Kommunikationsnetz (1) zu trennen,
**dadurch gekennzeichnet, daß** die Endstellen (2) ferner aufweisen:
eine Einrichtung (247) zum Senden eines Präsenzinformations-Anfragebefehls an die Sendeadresse, um die anderen an das Kommunikationsnetz (1) angeschlossenen Endstellen zur Rückmeldung von Präsenzinformation zu veranlassen, die eine Benutzerkennung und einen Kommunikationsmodus der jeweiligen Endstelle nach dem Anschluß an das Kommunikationsnetz anzeigt; und
eine Einrichtung (296 bis 298) zum Empfangen von Erwiderungsbefehlen auf den Präsenzinformations-Anfragebefehl von den anderen Endstellen und zum Ausgeben der Benutzerkennung und des Kommunikationsmodus der anderen Endstellen, die durch die Präsenzinformation in dem Erwiderungsbefehl angezeigt werden, auf dem Anzeigeschirm.

2. System nach Anspruch 1, wobei der spezifizierte Kommunikationsmodus in:
einer Audio-Kommunikation mit wenigstens einer der anderen Endstellen über einen oder mehrere Mehrfachnutzer-Kommunikationskanäle, die jeweils zuvor einer vorbestimmten Multicast-Adresse zugeordnet wurden;
einem Austausch von Textmitteilungen mit mehreren anderen der Endstellen über Mehrfachnutzer-Kommunikationskanäle; oder
einem Austausch von Textmitteilungen mit einer ausgewählten anderen der Endstellen besteht.

3. System nach Anspruch 2, wobei jede der Endstellen (2) ferner aufweist:
eine Einrichtung (260 bis 263) zum Senden eines Erwiderungsbefehls, der Adressinformationen der Endstelle in Reaktion auf einen Anschlußbefehl anzeigt, der von einer anderen der Endstellen an das Kommunikationsnetz (1) gesendet wurde.

4. System nach Anspruch 3, wobei jede der Endstellen (2) ferner aufweist:
eine Einrichtung zum Senden eines Erwiderungsbefehls an die Sendeadresse, wenn ein Präsenzinformations-Anfragebefehl von einer anderen der Endstellen empfangen wurde, wobei der Erwiderungsbefehl eine Benutzerkennung und einen Kommunikationsmodus der Endstelle anzeigt.

5. System nach Anspruch 2, wobei jede der Endstellen (2) ferner aufweist:
eine Audio-Eingabeeinrichtung (13);
eine Einrichtung (20 bis 22, 233 bis 240) zum wahlweisen Multicasting unter Verwendung einer vorbestimmten Multicast-Adresse als einer Zieladresse in der Audio-Kommunikation mit wenigstens einer anderen der Endstellen, durch die die Endstelle in der Audio-Kommunikation teilzunehmen wünscht, eines Beendigungsbefehls, der eine Beendigung der Audio-Kommunikation anzeigt, und eines Audiopakets, das durch die Audio-Eingabeeinrichtung (13) erlangte Audiodaten aufweist;
eine Einrichtung (23 bis 25) zum Empfangen von Audiopaketen, die mit der Multicast-Adresse von einer der anderen Endstellen übertragen wurden; und
eine Einrichtung (26 bis 29) zum Mischen von Audiodaten, die aus dem von einer der anderen Endstellen empfangenen Audiopaketen extrahiert wurden, und zum Ausgeben der gemischten Audiodaten an eine Audio-Ausgabeeinrichtung.

6. System nach Anspruch 2, wobei jede der Endstellen (2) ferner aufweist:
eine Einrichtung (253 bis 255, 236, 237) zum Multicasting eines Anfragebefehls zum Anfragen bezüglich Informationen zu Benutzern, die in einer Kommunikation teilnehmen, die über einen der Mehrfachbenutzer-Kommunikationskanäle durchgeführt wird; und
eine Einrichtung (270 bis 272) zum Multicasting eines die Kennungsinformation der Endstelle aufweisenden Befehls zu dem Mehrfachnutzer-Kommunikationskanal in Reaktion auf ein Anfragebefehl, der von dem Mehrfachnutzer-Kommunikationskanal empfangen wurde, falls die Endstelle in der Kommunikation über den Mehrfachnutzer-Kommunikationskanal teilnimmt.

7. System nach Anspruch 2, wobei jede der Endstellen (2) ferner aufweist:
eine Einrichtung (253, 340) zum Austauschen von Textmitteilungen mit einer anderen der Endstellen unter Verwendung von TCP; und
eine Einrichtung (243, 244, 340) zum Austauschen von Textmitteilungen mit mehreren der anderen Endstellen unter Verwendung von UDP.

8. System nach Anspruch 4, wobei jede der Endstellen (2) aufweist:
eine Einrichtung (30, 299) zum Abwarten einer Anfrage zum Austauschen von Textmitteilungen von einer anderen der Endstellen, nachdem der Anschluß an das Kommunikationsnetz (1) vollendet ist,
eine Einrichtung (241 bis 244), um bei Anfrage von einem Benutzer der Endstelle zum Austausch von Textmitteilungen durch Angabe von Informationen über einen Kommunikationspartner einen Befehl zu übertragen, der den Austausch von Textmitteilungen mit einer der anderen Endstellen beantragt, die eine Adresse aufweisen, die durch die angegebenen Informationen über den Kommunikationspartner spezifiziert ist;
eine Einrichtung (14, 299 bis 301, 400 bis 405), um bei Empfang eines Befehls zum Beantragen des Austauschs von Textmitteilungen von einer der anderen Endstellen Information über die beantragende Endstelle ausgegeben wird, die durch den empfangenen Anfragebefehl spezifiziert ist, einen Erwiderungsbefehl zum Bestätigen der Anfrage zu übertragen, falls der Benutzer der Endstelle eine Annahme der Anfrage erwidert, und einen Erwiderungsbefehl zum Zurückweisen der Anfrage zu übertragen, falls der Benutzer eine Zurückweisung der Anfrage erwidert; und
eine Einrichtung (220 bis 223) zum Übertragen eines Beendigungsbefehls des Austauschs von Textmitteilungen mit einer der anderen Endstellen als Kommunikationspartner, wenn der Benutzer das Beenden des Austauschs von Textmitteilungen befiehlt.

9. System nach Anspruch 4, wobei der Erwiderungsbefehl als Kennung des Kommunikationsmodus aufweist:
eine Kennung, die anzeigt, daß die Endstelle in einem kommunikationslosen Zustand ist;
eine Kennung, die anzeigt, daß die Endstelle in einem Audio-Kommunikationszustand mit wenigstens einer der anderen Endstellen ist; oder
eine Kennung, die anzeigt, daß die Endstelle in einem Zustand des Austauschs von Textmitteilungen mit wenigstens einer der anderen Endstellen ist.

## Revendications

1. Système de communication distribué comportant une pluralité de terminaux (2) connectés entre eux via un réseau de communication (1) pouvant effectuer une communication à multidiffusion, dans lequel chacun desdits terminaux comportent :
des moyens (218, 219) pour diffuser une instruction de connexion afin de connecter le terminal audit réseau de communication (1), en utilisant une adresse de diffusion prédéterminée en tant qu'adresse de destination de l'instruction,
des moyens (230, 231, 241, 245) pour spécifier un mode de communication à adopter pour le terminal en réponse à une opération d'entrée d'utilisateur sur un écran d'affichage pour désigner un mode parmi une pluralité de modes de communication sélectionnables,
des moyens (232 à 235, 242 à 244, 250 à 253) pour communiquer des informations avec au moins un autre desdits terminaux dans ledit mode de communication spécifié, et
des moyens (220 à 222, 238, 239, 256, 257) pour transmettre une instruction de déconnexion à ladite adresse de diffusion afin de déconnecter le terminal dudit réseau de communication (1),
**caractérisé en ce que** chacun desdits terminaux **(2) comporte en outre :**
des moyens (247) pour diffuser une instruction de demande d'informations de présence à ladite adresse de diffusion afin de demander aux autres terminaux connectés audit réseau de communication (1) de renvoyer des informations de présence indiquant un identifiant d'utilisateur et un mode de communication des terminaux respectifs après la connexion audit réseau de communication, et
des moyens (296 à 298) pour recevoir des instructions de réponse à ladite instruction de demande d'informations de présence en provenance desdits autres terminaux et délivrer en sortie sur ledit écran d'affichage l'identifiant d'utilisateur et le mode de communication desdits autres terminaux indiqués par les informations de présence desdites instructions de réponse.

2. Système selon la revendication 1, dans lequel ledit mode de communication spécifié est l'un parmi :
une communication audio avec au moins l'un desdits autres terminaux via un ou plusieurs canaux de communication multi-utilisateur, chacun s'étant vu attribuer une adresse de multidiffusion prédéterminée précédemment,
un échange de messages textuels avec une pluralité d'autres desdits terminaux via des canaux de communication multi-utilisateur, et
un échange de messages textuels avec un autre terminal sélectionné parmi lesdits terminaux.

3. Système selon la revendication 2, dans lequel chacun desdits terminaux (2) comporte en outre :
des moyens (260 à 263) pour diffuser une instruction de réponse indiquant des informations d'adresse du terminal en réponse à une instruction de connexion diffusée par un autre quelconque desdits terminaux audit réseau de communication (1).

4. Système selon la revendication 3, dans lequel chacun desdits terminaux (2) comporte en outre :
des moyens (294, 295) pour diffuser une instruction de réponse à ladite adresse de diffusion lors de la réception d'une instruction de demande d'informations de présence en provenance d'un autre quelconque desdits terminaux, ladite instruction de réponse indiquant un identifiant d'utilisateur et un mode de communication du terminal.

5. Système selon la revendication 2, dans lequel chacun desdits terminaux (2) comporte en outre :
des moyens d'entrée audio (13),
des moyens (20 à 22, 233 à 240) pour multidiffuser de manière sélective, en utilisant une adresse de multidiffusion prédéterminée en tant qu'adresse de destination de ladite communication audio avec au moins un autre desdits terminaux à travers lesquels le terminal souhaite participer à la communication audio, une instruction de départ indiquant un départ de la communication audio, et un paquet audio incluant des données audio acquises par lesdits moyens d'entrée audio (13),
des moyens (23 à 25) pour recevoir des paquets audio transmis avec ladite adresse de multidiffusion depuis l'un quelconque desdits autres terminaux, et
des moyens (26 à 29) mélangeant des données audio extraites des paquets audio reçus en provenance de l'un quelconque desdits autres terminaux, et délivrant en sortie les données audio mélangées aux moyens de sortie audio.

6. Système selon la revendication 2, dans lequel chacun desdits terminaux (2) comporte en outre :
des moyens (253 à 255, 236, 237) pour multidiffuser une instruction de demande afin de demander des informations concernant des utilisateurs participant à une communication exécutée via l'un desdits canaux de communication multi-utilisateur,
des moyens (270 à 272) pour multidiffuser une instruction incluant des informations d'identification du terminal audit canal de communication multi-utilisateur en réponse à une instruction de demande reçue en provenance du canal de communication multi-utilisateur, si le terminal participe à la communication via ledit canal de communication multi-utilisateur.

7. Système selon la revendication 2, dans lequel chacun desdits terminaux (2) comporte en outre :
des moyens (253, 340) pour échanger des messages textuels avec un autre desdits terminaux en utilisant le protocole TCP, et
des moyens (243, 244, 340) pour échanger des messages textuels avec une pluralité desdits aux terminaux en utilisant le protocole UDP.

8. Système selon la revendication 4, dans lequel chacun desdits terminaux (2) comporte :
des moyens (30, 299) pour attendre une demande afin d'échanger des messages textuels en provenance d'un autre terminal quelconque parmi lesdits terminaux après avoir terminé la connexion audit réseau de communication (1),
des moyens (241 à 244) pour transmettre, lorsqu'il est demandé par un utilisateur du terminal d'échanger des messages textuels en spécifiant des informations sur un partenaire de communication, une instruction demandant d'échanger des messages textuels à l'un desdits autres terminaux ayant une adresse spécifiée depuis les informations spécifiées sur le partenaire de communication,
des moyens (14, 299 à 301, 400 à 405) pour délivrer en sortie sur l'écran d'affichage du terminal, lorsqu'une instruction demandant d'échanger des messages textuels est reçue en provenance de l'un quelconque desdits terminaux, des informations concernant le terminal demandeur spécifiées par l'instruction de demande reçue, transmettre une instruction de réponse pour accuser réception de la demande si l'utilisateur du terminal renvoie une acceptation de la demande, et transmettre une instruction de réponse pour rejeter la demande si ledit utilisateur renvoie un refus de la demande, et
des moyens (220 à 223) pour transmettre une instruction pour terminer l'échange de messages textuels à l'un desdits autres terminaux étant le partenaire de communication, lorsque l'utilisateur ordonne la fin de l'échange de messages textuels.

9. Système selon la revendication 4, dans lequel ladite instruction de réponse inclut, en tant qu'identifiant dudit mode de communication, l'un parmi :
un identifiant indiquant que le terminal est dans un état hors communication,
un identifiant indiquant que le terminal est dans un état de communication audio avec au moins l'un desdits autres terminaux ; et
un identifiant indiquant que le terminal est dans un état d'échange de messages textuels avec au moins l'un desdits autres terminaux.
